# EUROPEAN PATENT APPLICATION

(11) **EP 1 542 120 A1**
(43) Date of publication of application: **15.06.2005**
(21) Application number: 03736150.8
(22) Date of filing: 11.06.2003
(51) Int. Cl.: G06F 3/023, G06F 3/00

(54) **CONTROL SYSTEM, METHOD, AND PROGRAM USING RHYTHM PATTERN**

(30) Priority: 22.08.2002 JP 2002242083
(71) Applicant: MATSUSHITA ELECTRIC INDUSTRIAL CO., LTD., Kadoma-shi, Osaka 571-8501 (JP)
(72) Inventor: YAMASHITA, Atsushi, Osaka-shi, Osaka 545-0043 (JP); SAKAMOTO, Kiyomi, Ikoma-shi, Nara 630-0212 (JP); IISAKA, Atsushi, Katano-shi, Osaka 576-0021 (JP)
(74) Representative: Balsters, Robert
(86) International application number: PCT/JP2003/007391
(87) International publication number: WO 2004/019197

(57) **Abstract**

A control system for reliably performing minimally required operations using a small number of input devices is provided. A rhythm input section (101) converts a rhythm pattern input by the user to an electrical signal, which is in turn output. A rhythm dictionary storage section (103) stores a rhythm dictionary table which associates the contents of a control of an apparatus with a registered rhythm pattern. The registered rhythm pattern is obtained by typifying a pronunciation pattern of a name indicating the contents of the control. A control section (102) analyzes the electrical signal from the rhythm input section (101) to recognize the input rhythm pattern input by the user, recognizes the contents of a corresponding control by referencing the rhythm dictionary storage section (103), and controls an operation of an in-vehicle apparatus.

## Description

### TECHNICAL FIELD

The present invention relates to a system for controlling operations of various apparatuses. More particularly, the present invention relates to a system providing a user interface for employing a small number of operating devices to control operations of various apparatuses.

### BACKGROUND ART

Recent various apparatuses, such as, particularly, AV apparatuses (e.g., television, video and audio apparatuses, etc.), in-vehicle apparatuses (e.g., car navigation and car audio apparatuses, etc.) and the like, have considerably many functions. Along with it, the number of operating devices, such as keys and joysticks, which are mounted on an apparatus body or a remote controller, is increased. The increased number of operating devices makes it difficult to operate the apparatus.

Also, it is difficult to arrange input devices supporting tens or hundreds of functions in a limited space.

To solve such problems, various systems have been proposed. For example, a system has been proposed in which functions are organized into a hierarchical structure so that the number of operating devices is reduced. This system is only provided with an operating device for selecting a hierarchical level and an operating device for selecting a function in the selected hierarchical level.

Alternatively, a system capable of reducing the number of operating devices by using speech recognition has been proposed. This system is only provided with an operating device for indicating the start of speech recognition and a microphone for inputting speech. Therefore, the number of operating devices can be dramatically reduced.

However, in the case of the system in which functions are organized into a hierarchical structure, the user has to always recognize which hierarchical level is currently in a selected mode in order to correctly select a desired function. In other words, the system needs to always inform the user of the currently selected mode using an image or audio, a state of a switch, or the like. The user also needs to select an appropriate hierarchical level by operating an operating device many times in order to select a desired function. The user cannot select a desired function by one-time operation. In order to correctly select a desired function, the user also needs to recognize how functions possessed by a system are organized into a hierarchical structure. These requirements are a barrier against the introduction of the system for the user who is bad with machines.

Systems employing speech recognition have a problem such that the speech recognition rate is impaired depending on the surrounding situation, such as surrounding noise, background music, the user's voice, the position of a microphone, or the like. When the speech recognition rate is impaired, a desired function is not eventually performed. In other words, variations in speech recognition disable reliable operations. Also, speech recognition requires a large-capacity memory and high computation speed. Therefore, systems with a poor memory and low computation speed cannot achieve practical speech recognition speed.

Therefore, an object of the present invention is to provide a system capable of reliably performing a desired function by utilizing a small number of operating devices in accordance with the user's operation instruction.

### DISCLOSURE OF THE INVENTION

To achieve the above object, the present invention has the following aspects.

A first aspect of the present invention is directed to a control system for controlling an operation of at least one apparatus, comprising:
a rhythm input section of outputting, as an input rhythm signal, an electrical signal whose amplitude level varies depending on a tap input from a user, the tap input corresponding to a pronunciation pattern of a name indicating the contents of a control of the apparatus;
a rhythm dictionary storage section of storing a rhythm dictionary table for associating the contents of the control of the apparatus with a registered rhythm pattern typifying the pronunciation pattern of the name indicating the contents of the control; and
a control section of controlling the operation of the apparatus,
wherein the control section comprises:
an input rhythm pattern recognition means of analyzing the input rhythm signal input from the rhythm input section to recognize an input rhythm pattern; and
an apparatus control means of referencing the rhythm dictionary table to search for a registered rhythm pattern matching the input rhythm pattern recognized by the input rhythm pattern recognition means, and based on the contents of the control corresponding to the registered rhythm pattern, controlling the apparatus.

According to the above-described first aspect, an operation of each apparatus is controlled only by the user tapping a rhythm input section. Therefore, a control system which can control an operation of each apparatus using such small a number of input devices as possible (typically, one switch or sensor), is provided. Further, a control system without being affected by noise is provided. Further, the user can operate each apparatus only by inputting a rhythm pattern in accordance with a rhythm of a natural language, thereby providing a control system having satisfactory operability. Further, the user can be expected to acquire operations quickly.

Preferably, in the rhythm dictionary table, the registered rhythm pattern may be defined by dividing the name indicating the contents of the control into at least one predetermined unit, and thereafter, assigning a predetermined unit rhythm pattern to each divided unit, and
the input rhythm pattern recognition means may recognize the input rhythm pattern by simplifying a temporal change in the amplitude level of the input rhythm signal.

Thereby, the input rhythm pattern is recognized by simplifying a temporal change in the amplitude level of an input rhythm signal, resulting in an increase in the possibility that the recognized input rhythm pattern matches the rhythm pattern intended by the user. As a result, a control system which can control an operation of each apparatus in a manner intended by the user, is provided.

Preferably, the unit rhythm pattern may be defined by assigning the presence or absence of a beat to the presence or absence of a sound in the predetermined unit, and
the input rhythm pattern recognition means may recognize a beat timing at which the user taps the rhythm input section and/or a silent beat timing at which no tap is made for a predetermined time, based on the temporal change in the amplitude level, and may recognize the input rhythm pattern by representing the temporal change of the input rhythm signal using the beat and/or silent beat timing.

Thereby, the input rhythm pattern is recognized by a simple algorithm such that a beat and/or a silent beat are recognized by determining whether or not the tap time interval exceeds a predetermined time, thereby making it possible to reduce an increase in process load of the control system. Further, the sizes of a memory and a program which are consumed are minimized.

Further, an intensity of the sound of the predetermined unit may be further defined in the unit rhythm pattern, and
the input rhythm pattern recognition means may further recognize an intensity of a tap at the beat timing in a stepwise manner based on an intensity of the amplitude level, and represent the intensity of the tap at the beat timing so that a strong tap is distinguished from a weak tap to recognize the input rhythm pattern.

Thereby, since the name of the contents of a control intended by the user is recognized in association with the intensity of a sound, a user-friendly control system is provided for users who speak a language in which a difference between accents or intonations is important (e.g., English, etc.). Further, by defining a difference between accents, the number of registered rhythm patterns can be increased. As a result, a larger number of control contents are defined.

Further, the input rhythm pattern recognition means may further recognizes the input rhythm pattern such that there are a beat time and a silent beat time when the user continues to press the rhythm input section for the predetermined time interval.

Thereby, when the rhythm input section is pressed continuously, the control system can determine that a prolonged sound is input.

Preferably, the unit rhythm pattern may be defined by assigning the presence or absence of a beat to the presence or absence of a sound in the predetermined unit, and
the input rhythm pattern recognition means may detect the presence or absence of the beat based on the degree of the amplitude level, assume all possible rhythm patterns having beats in the number of detected beats, search the assumed rhythm patterns for a rhythm pattern best matching a tendency of the temporal change of the input rhythm signal, and recognize the retrieved rhythm pattern as the input rhythm pattern.

Thereby, the control system recognizes an input rhythm pattern based on a tendency of a whole temporal change in an input rhythm signal, thereby making it possible to absorb differences in tap speed or the like among individuals to recognize the input rhythm pattern. Therefore, a control system which can control each apparatus more reliably is provided.

In this case, the input rhythm pattern recognition means may obtain a difference between a time interval between two adjacent beats in the assumed rhythm pattern and a time interval between two adjacent beats in the input rhythm signal, and may recognize a rhythm pattern having a smallest average value of the difference among the assumed rhythm patterns as the input rhythm pattern.

Thereby, the control system only obtains a difference in time interval and calculates an average value, thereby making it possible to recognize a rhythm pattern best matching a tendency of the temporal change. Therefore, a control system which can use a simple algorithm to recognize a rhythm pattern is provided.

Further, when the beats are equally spaced in the recognized input rhythm pattern, the input rhythm pattern recognition means may further determine whether or not the interval of the beat exceeds a predetermined time interval, and when the interval of the beat exceeds the predetermined time interval, newly recognize that the input rhythm pattern is a rhythm pattern in which a beat and a silent beat are continually repeated, or when the interval of the beat does not exceed the predetermined time interval, newly recognize that the input tap pattern is a rhythm pattern in which only a beat is continually repeated.

Thereby, the control system can newly recognize whether an input rhythm pattern is composed of only a beat or a repetition of a beat and a silent beat. Therefore, a control system which can recognize an input rhythm pattern more reliably is provided.

Further, an intensity of the sound of the predetermined unit may be further defined in the unit rhythm pattern, and
the input rhythm pattern recognition means may further recognize an intensity of a tap at the beat timing in a stepwise manner based on an intensity of the amplitude level, and represent the intensity of the tap at the beat timing so that a strong tap is distinguished from a weak tap to recognize the input rhythm pattern.

Preferably, the unit rhythm pattern may be defined by assigning the presence or absence of a beat to the presence or absence of a sound in the predetermined unit, and
the input rhythm pattern recognition means may search the rhythm patterns registered in the rhythm dictionary table for a rhythm pattern best matching a tendency of the temporal change of the input rhythm signal, and recognize the retrieved rhythm pattern as the input rhythm pattern.

Thereby, the control system can select an input rhythm pattern to be selected among registered rhythm patterns. Therefore, a situation is avoided such that no registered rhythm pattern matching a recognized input rhythm pattern is registered in a rhythm dictionary table. As a result, a control system which can reliably control an operation of each apparatus in a manner desired by the user is provided.

In this case, the input rhythm pattern recognition means may detect the presence or absence of the beat based on the degree of the amplitude level, search the rhythm patterns registered in the rhythm dictionary table for a rhythm pattern having beats in the number of the detected beats, and further search the retrieved rhythm patterns for a rhythm pattern best matching a tendency of the temporal change, and recognize the finally retrieved rhythm pattern as the input rhythm pattern.

Thereby, the number of rhythm patterns to be searched is decreased, thereby reducing the process load of the control system.

Specifically, when further searching for a rhythm pattern best matching the tendency of the temporal change, the input rhythm pattern recognition means may obtain a difference between a time interval between two adjacent beats in the retrieved rhythmpattern and a time interval between two adjacent beats in the input rhythm signal, and recognize a rhythm pattern having a smallest average value of the difference among the retrieved rhythm patterns as the input rhythm pattern.

Further, an intensity of the sound of the predetermined unit may be further defined in the unit rhythm pattern, and
the input rhythm pattern recognition means may further recognize an intensity of a tap at the beat timing in a stepwise manner based on an intensity of the amplitude level, and represent the intensity of the tap at the beat timing so that a strong tap is distinguished from a weak tap to recognize the input rhythm pattern.

Preferably, the unit rhythm pattern may be defined by assigning the presence or absence of a beat to the presence or absence of a sound in the predetermined unit, and
the input rhythm pattern recognition means may detect the presence or absence of the beat based on the degree of the amplitude level, obtain a smallest one of time intervals between two adjacent beats in the input rhythm signal, determine whether or not there is a silent beat between the two adjacent beats based on a relative value obtained by comparing the smallest time interval and a time interval between two other beats, and represent the temporal change of the input rhythm signal using a timing of the beat and/or the silent beat to recognize the input rhythm pattern.

Thereby, the control system recognizes an input rhythm pattern by relative evaluation. Therefore, the input rhythm pattern can be recognized while absorbing differences in tap speed or the like among individuals. Therefore, a control system which can control each apparatus more reliably is provided.

In this case, an intensity of the sound of the predetermined unit may be further defined in the unit rhythm pattern, and
the input rhythm pattern recognition means may further recognize an intensity of a tap at the beat timing in a stepwise manner based on an intensity of the amplitude level, and represents the intensity of the tap at the beat timing so that a strong tap is distinguished from a weak tap to recognize the input rhythm pattern.

Preferably, the predetermined unit for dividing the name of the contents of the control may be a mora unit.

Thereby, a name indicating the contents of a control is divided into moras. The user can input a rhythm in accordance with a rhythm naturally uttered. Therefore, a user-friendly control system is provided. It is particularly effective for languages, such as Japanese, to divide the contents of a control into moras.

Further, preferably, the predetermined unit for dividing the name of the contents of the control may be a syllabic unit.

Thereby, a name indicating the contents of a control is divided into syllabic units. The user can input a rhythm in accordance with a rhythm naturally uttered. Therefore, a user-friendly control system is provided. It is particularly effective for languages, such as English, to divide the contents of a control into syllabic units.

Preferably, the control sectionmay further comprise a rhythm pattern edition means of editing contents registered in the rhythm dictionary table in response to an instruction of the user.

Thereby, the rhythm dictionary table is customized.

For example, the rhythm pattern edition means may cause the input rhythmpattern recognition means to recognize an input rhythm pattern intended by the user tapping the rhythm input section, and register the input rhythm pattern as a registered rhythmpattern in the rhythm dictionary table.

Thereby, the rhythm dictionary table is edited by a rhythm pattern input by the user, and therefore, the rhythm dictionary table is constructed taking into account each user' s way of tapping.

Further, the rhythm pattern edition means may divide the name of a control represented by character information input by the user into at least one predetermined unit, assign a predetermined unit rhythm pattern to each divided unit to define a rhythm pattern, and register the rhythm pattern as a registered rhythm pattern in the rhythm dictionary table.

Thereby, the user can specify the name of the contents of a control. Therefore, a rhythm dictionary table which employs the name of the contents of a control which is easy for the user to remember, is constructed. Further, the user can register a rhythm pattern without being aware of a rule between a word and a rhythm.

Further, the rhythm pattern edition means may edit the registered contents of the rhythm dictionary table while confirming duplication of the registered rhythm pattern.

Further, in the rhythm dictionary table, the contents of the control may be defined in a hierarchical structure,
the apparatus control means may memorize a hierarchical layer currently searched, and search matching of the input rhythm pattern and the registered rhythm pattern in the currently searched hierarchical layer, and
the rhythm input section may further comprise a hierarchical layer switching means for causing the apparatus control means to switch the currently searched hierarchical layer.

Thereby, the control system defines the contents of a control in a hierarchical structure. Therefore, even when there are a limited number of registered rhythm patterns, a larger number of the control contents can be defined as compared to a single-layer structure. Further, by defining the contents of a control in a hierarchical structure, the user can easily understand the contents of a control.

In this case, the rhythm input section may comprise two or more input devices for inputting a tap by the user, and
the hierarchical layer switching means may cause the apparatus control means to switch the currently searched hierarchical layer when the input device to be tapped is switched.

Thereby, the user can switch the hierarchical structure only by switching an input device to be tapped. Therefore, a control system which can be simply operated is provided.

Preferably, a user-specific registered rhythm pattern may be defined in the rhythm dictionary table, and
the apparatus control means may search for a matching registered rhythm pattern for each user.

Thereby, a registered rhythm pattern is defined for each user. Therefore, the control system can recognize an input rhythm pattern, taking into account each user's way of tapping.

Preferably, the input rhythm pattern recognition means may memorize a parameter required for detection of the temporal change of the input rhythm signal, and analyze the input rhythm signal based on the parameter for each user.

Thereby, a parameter is defined for each user. Therefore, the control system can recognize an input rhythm pattern, taking into account each user's way of tapping.

Preferably, the control systemmay further comprise an output section of informing the user of a result of the search by the apparatus control means in terms of whether or not there is a matching registered rhythm pattern, using vibration, voice, visual sensation, or the like.

Thereby, the user can know the success or failure of rhythm input, resulting in reassurance.

Further, the control systemmay further comprise a sensation output section of causing the user to sense the rhythm pattern registered in the rhythm dictionary table in response to an instruction of the user.

Thereby, the user can sense a registered rhythm pattern via vibration, screen display, voice or the like, thereby making it possible to learn rhythm input. As a result, the user can acquire a registered rhythm pattern quickly.

Preferably, when the amplitude of the input rhythm signal is at a LOW level for a predetermined time, the input rhythm pattern recognition means may recognize the input rhythm pattern assuming that the input is ended.

Thereby, the control system can automatically recognize the end of inputting. Therefore, the user does not have to perform an operation for finishing inputting.

For example, the control system may be mounted in a vehicle.

In this case, the rhythm input section may be disposed on a steering wheel of the vehicle and has a structure which allows confirmation of a position by the sense of touch.

A second aspect of the present invention is directed to a method for controlling an operation of at least one apparatus using a computer apparatus, comprising the steps:
the computer apparatus analyzes an electrical signal input to the computer apparatus to recognize an input rhythm pattern;
the computer apparatus references a rhythm dictionary table for associating the contents of a control of the apparatus with a registered rhythm pattern typifying a pronunciation pattern of a name indicating the contents of the control of the apparatus, the rhythm dictionary table being stored in the computer apparatus, to search for a registered rhythm pattern matching the recognized input rhythm pattern; and
the computer apparatus controls the apparatus based on the contents of the control corresponding to the registered rhythm pattern.

A third aspect of the present invention is directed to a program for controlling an operation of at least one piece of software using a computer apparatus, comprising the steps:
the computer apparatus analyzes an electrical signal input to the computer apparatus to recognize an input rhythm pattern;
the computer apparatus references a rhythm dictionary table for associating the contents of a control of the apparatus with a registered rhythm pattern typifying a pronunciation pattern of a name indicating the contents of the control of the apparatus, the rhythm dictionary table being stored in the computer apparatus, to search for a registered rhythm pattern matching the recognized input rhythm pattern; and
the computer apparatus controls the apparatus based on the contents of the control corresponding to the registered rhythm pattern.

### BRIEF DESCRIPTION OF THE DRAWINGS

FIG. 1 is a diagram showing a structure of a control system 100 according to a first embodiment of the present invention and a whole structure of a system to which the control system 100 is applied;
FIG. 2 is a diagram schematically showing an exemplary position in a vehicle where the rhythm input section 101 is mounted;
FIG. 3 is a diagram schematically showing a waveform of an input rhythm signal when a digital input device is used as the rhythm input section 101;
FIG. 4 is a diagram showing an exemplary rule table;
FIG. 5 is a diagram showing an exemplary rhythm dictionary table;
FIG. 6 is a flowchart showing an operation of a control section 102 when recognizing a rhythm input by the user tapping the rhythm input section 101 and controls an operation of an in-vehicle apparatus;
FIG. 7 is a flowchart showing a detailed operation of the control section 102 in an input rhythm pattern recognition process (step S102);
FIG. 8 is a diagram showing a waveform of an input rhythm signal where an input device is used which continues to output an input rhythm signal having a HIGH level when pressed continuously;
FIG. 9 is a diagram schematically showing a waveform of an input rhythm signal where an analog input device is used as the rhythm input section 101;
FIG. 10 is a diagram schematically showing a waveform of an input rhythm signal output from a rhythm input section 101 in a second embodiment;
FIG. 11 is a diagram showing an exemplary rule table in the second embodiment;
FIG. 12 is a diagram showing an exemplary rhythm dictionary table in the second embodiment;
FIG. 13 is a flowchart showing a detailed operation of a control section 102 of the second embodiment in an input rhythm pattern recognition process;
FIG. 14 is a flowchart showing a detailed operation of a control section 102 of a third embodiment in an input rhythm pattern recognition process;
FIG. 15 is a diagram showing an example of an array Ti of tap time intervals memorized in step S401;
FIG. 16 is a diagram showing an exemplary time distribution when a rhythm pattern assumed in step S405 is not appropriate;
FIG. 17 is a diagram showing an exemplary time distribution when a rhythm pattern assumed in step S405 is appropriate;
FIG. 18 is a flowchart showing a detailed operation of a control section 102 of a fourth embodiment in an input rhythm pattern recognition process;
FIG. 19 is a flowchart showing a detailed operation of a control section 1 02 of a fifth embodiment in an input rhythm pattern recognition process;
FIG. 20 is a diagram showing a whole structure of a control system 600 according to a sixth embodiment of the present invention and a system to which the control system 600 is applied;
FIG. 21 is a flowchart showing an operation of a control section 602 in which a control section 102 recognizes a rhythm input by the user tapping a rhythm input section 101 to control an operation of an in-vehicle apparatus;
FIG. 22 is a flowchart showing an operation of the control section 602 when the user confirms/edits the contents of a rhythm dictionary table;
FIG. 23 is a diagram schematically showing a position in a vehicle of a rhythm input section 101 according to a seventh embodiment where the rhythm input section 101 is an analog input device composed of a piezoelectric sensor;
FIG. 24 is a diagram showing an exemplary rhythm dictionary table stored in a rhythm dictionary storage section 103; and
FIG. 25 is a flowchart showing a detailed operation of a control section 102 in a rhythm pattern recognition process.

### BEST MODE FOR CARRYING OUT THE INVENTION

Hereinafter, embodiments of the present invention will be described with reference to the accompanying drawings.

Firstly, an outline of each embodiment will be described.

In a first embodiment, a system which determines whether or not a rhythm pattern matching a rhythm pattern input by the user is registered in a rhythm dictionary, and when there is a matching rhythm pattern, controls an operation of various apparatuses, will be described.

In a second embodiment, a system which recognizes an intensity of an input rhythm pattern, determines whether or not a matching rhythm pattern is registered in a rhythm dictionary, and when there is a matching rhythm pattern, controls an operation of various apparatuses, will be described.

In a third embodiment, a control system which searches all possible assumed rhythm patterns for a rhythm pattern closest to an input rhythm pattern, will be described.

In a fourth embodiment, a control system which recognizes an input rhythm pattern by relative evaluation, will be described.

In a fifth embodiment, a control system obtained by adding a function of recognizing an intensity of a rhythm pattern to the control system of the third and fourth embodiments, will be described.

In a sixth embodiment, a control system which can switch parameters required for recognition of a rhythm pattern, depending on the user, will be described. Also, a control system which can edit a rhythm dictionary will be described.

In a seventh embodiment, a control system which allows operations of multiple functions using a hierarchically-constructed rhythm dictionary, will be described.

Hereinafter, each embodiment will be described in detail.

### (First Embodiment)

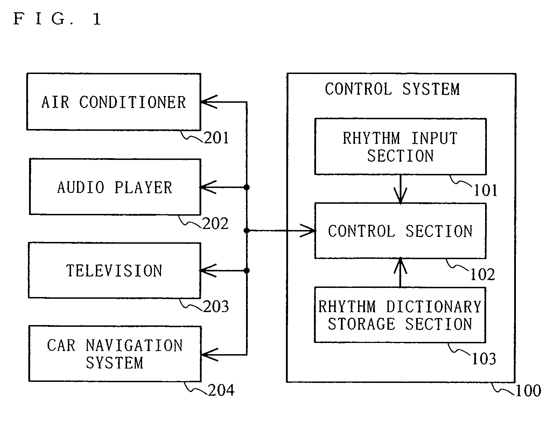

FIG. 1 is a diagram showing a structure of a control system 100 according to the first embodiment of the present invention and a whole structure of a system to which the control system 100 is applied. In this embodiment, for the sake of simplicity, the control system 100 is assumed to be a system for controlling in-vehicle apparatuses, such as an air conditioner, an audio player and the like.

In FIG. 1, the whole system comprises the control system 100, an air conditioner 201, an audio player 202, a television 203, and a car navigation system 204. The air conditioner 201, the audio player 202, the television 203 and the car navigation system 204 are apparatuses mounted in a vehicle (hereinafter referred to as in-vehicle apparatuses). In-vehicle apparatuses described herein are for illustrative purpose only. In-vehicle apparatuses other than those of FIG. 1 may be included in the system. Alternatively, only a portion of the in-vehicle apparatuses of FIG. 1 may be included in the system.

The control system 100 includes a rhythm input section 101, acontrolsection 102, anda rhythmdictionarystorage section 103.

To cause an in-vehicle apparatus to execute a certain function, the user strikes the rhythm input section 101 with several light blows in a manner which corresponds to a pronunciation pattern of the name of the function (a rhythm produced by uttering the name of the function). Hereinafter, to strike the rhythm input section 101 with several light blows is referred to as "tap the rhythm input section 101", and to input by tapping is referred to as "tap input". The rhythm input section 101 outputs an electrical signal whose amplitude level varies depending on the tap input (hereinafter referred to as an input rhythm signal). The control section 102 receives the input rhythm signal output from the rhythm input section 101 and analyzes a time distribution of the amplitude level of the input rhythm signal to recognize a rhythm pattern which is intended by the user (hereinafter referred to as an input rhythm pattern). The control section 102 searches the rhythm dictionary storage section 103 to determine whether or not a rhythm pattern matching the input rhythm pattern thus recognized is registered in the rhythm dictionary storage section 103. When a matching rhythm pattern is registered in the rhythm dictionary storage section 103, the control section 102 recognizes the contents of a control corresponding to the rhythm pattern and controls an operation of an in-vehicle apparatus corresponds to the contents of the control.

The rhythm input section 101 is composed of a digital input device, such as a touch pad, a contact switch or the like. The rhythm input section 101 supplies an input rhythm signal which is output depending on a tap input by the user, to the control section 102.

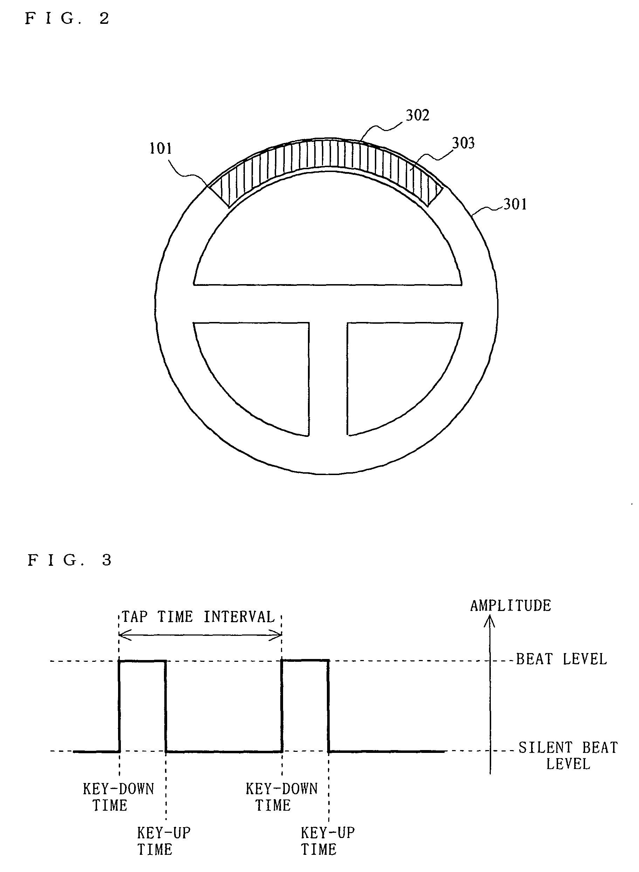

FIG. 2 is a diagram schematically showing an exemplary position in a vehicle where the rhythm input section 101 is mounted. The rhythm input section 101 is provided on an upper portion of a steering wheel 301 for ease of tapping by the driver while driving. The rhythm input section 101 comprises a contact switch 302 and a projection 303 which is provided at a position where the contact switch 302 responds. The projection 303 has a structure which projects from the steering wheel 301 so that it is easy to find a place to be tapped even by groping. Note that the projection 303 may have a concave structure if the position of the structure can be confirmed by the sense of touch.

FIG. 3 is a diagram schematically showing a waveform of an input rhythm signal when a digital input device is used as the rhythm input section 101. Since the rhythm input section 101 is a digital input device, a rectangular pulse which goes from a silent beat level (LOW level) to a beat level (HIGH level) in association with tapping by the user, as shown in FIG. 3. In the first embodiment, a timing of rising of the pulse is referred to as a key-down time, while a timing of falling of the pulse is referred to as a key-up time. A time between adjacent key-down times is referred to as a tap time interval.

The rhythm dictionary storage section 1 03 is a memory device, such as a RAM, a ROM, a hard disk or the like. The rhythm dictionary storage section 103 stores a rhythm dictionary for associating the contents of controls of in-vehicle apparatuses with rhythm patterns. The rhythm dictionary comprises a rule table which defines a rule for typifying the name of the contents of a control, and a rhythm dictionary table for associating the names of the contents of controls with rhythm patterns.

Here, the term "rhythm pattern" used herein will be described. When uttering a word, the user utters the word with a predetermined rhythm. For example, the pronunciation of one word may include a long sound, a short sound, a strong sound, and/or a weak sound. This flow of sounds can be referred to as a pronunciation pattern. The rhythm pattern refers to a pattern which typifies the pronunciation pattern. Note that the pronunciation pattern can be referred to as a voice pattern.

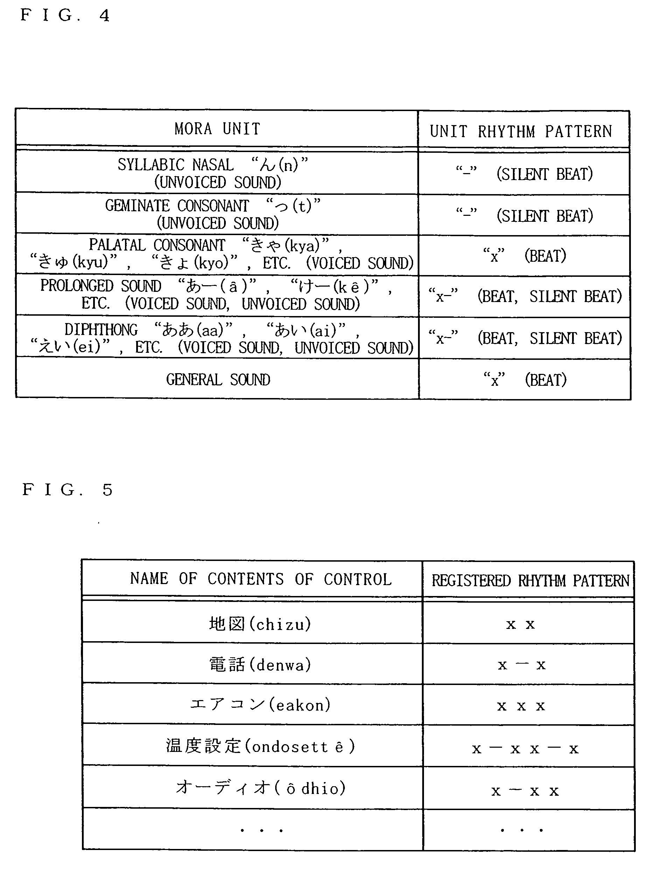

FIG. 4 is a diagram showing an example of the rule table. This rule table shows a correspondence between mora units of the Japanese language and unit rhythm patterns. Here, a unit rhythm pattern is composed of simple codes which represent the timing of tapping (beat) and the timing of not tapping (silent beat), for each mora unit. Here, "x" and "-" are used as codes. "x" represents a beat. "-" represents a silent beat.

Moras are divided into six: syllabic nasals (e.g., " 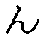 (n)" in the Japanese language, etc.); geminate consonants (e.g., " 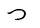 (tsu) " in the Japanese language, etc.); palatal consonants (e.g., " 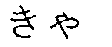 (kya)", " 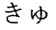 (kyu)", " 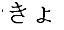 (kyo) " in the Japanese language, etc.); prolonged sounds (e.g.," 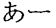 (â)", " 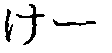 (kê)" in the Japanese language, etc); diphthongs (e.g., " 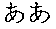 (aa)", " 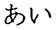 (ai)", " 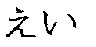 (ei)" in the Japanese language, etc.); and other sounds (e.g., only a vowel, a vowel + a consonant, etc., hereinafter referred to as general sounds). The syllabic nasal and the geminate consonant are unvoiced sounds. The palatal consonant and the general sound are voiced sounds. The prolonged sound and the diphthong include voiced sounds and unvoiced sounds.

As shown in FIG. 4, each syllabic nasal is assigned the unit rhythm pattern "-". Each geminate consonant is assigned the unit rhythm pattern "-". Each palatal consonant is assigned the unit rhythm pattern "x". Each prolonged sound is assigned a unit rhythm pattern "x-". Each diphthong is assigned the unit rhythm pattern "x-". Each general sound is assigned the unit rhythm pattern "x".

FIG. 5 is a diagram showing an example of the rhythm dictionary table. This rhythm dictionary table shows a correspondence between the names of the contents of controls of in-vehicle apparatuses and rhythm patterns. Hereinafter, a rhythm pattern registered in a rhythm dictionary table is referred to as a registered rhythm pattern. The names of the contents of controls of in-vehicle apparatuses indicate the names of functions of the in-vehicle apparatuses to be activated. Here, for the purpose of easy understanding by the user, the name of the contents of a control is defined as " 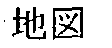 (chizu)" (map) in order to display a map, or the contents of a control is defined as " 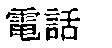 (denwa)" (telephone) in order to activate a telephone, for example. In this manner, more instinctive names of the contents of controls are used, but the rule for determining the names of the contents of controls are not limited to this. A registered rhythm pattern is defined by typifying the pronunciation pattern of the name of the contents of a corresponding control (a rhythm produced by uttering the name of the contents of the corresponding control). In the first embodiment, a registered rhythm pattern is defined by dividing the name of the contents of a control into mora units, and assigning each divided unit a corresponding unit rhythm pattern.

For example, the Japanese word " 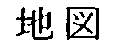 (chizu)" (map) is decomposed into mora units " 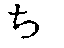 (chi)" and " 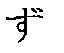 (zu)". " 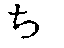 (chi)" and " 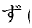 (zu) " are each a general sound. Therefore, a registered rhythm pattern corresponding to the name of the contents of a control " 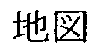 (chizu)" (map) is "xx".

A Japanese word " 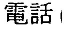 (denwa)" (telephone) is decomposed into moras " 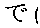 (de) ", " 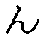 (n) " and " 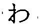 (wa) ". " 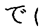 (de) " is a general sound, " 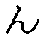 (n)" is a syllabic nasal, and " 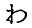 (wa)" is a general sound. Therefore, a registered rhythm pattern corresponding to the name of the contents of a control " 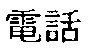 (denwa)" (telephone) is "x-x".

A Japanese word " 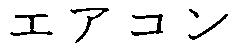 (eakon)" (air conditioner) is decomposed into moras " 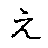 (e)", " 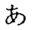 (a)", " 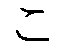 (ko)" and " 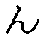 (n)". " 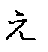 (e)", " 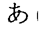 (a)" and " 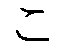 (ko)" are general sounds, and " 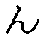 (n)" is a syllabic nasal. The syllabic nasal is a silent beat and " 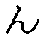 (n)" is the last sound. Therefore, a registered rhythm pattern corresponding to the name of the contents of a control " 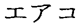 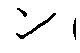 (eakon)" (air conditioner) is "xxx".

A Japanese word " 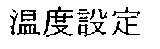 (ondosettê)" (temperature setting) is decomposed into moras " 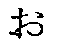 (o)", " 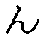 (n)", " 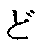 (do)", " 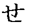 (se)", " 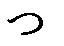 (t)", and " 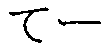 (tê)". " 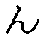 (n)" is a syllabic nasal, " 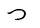 (t)" is a geminate consonant, and " 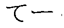 (tê)" is a prolonged sound and a last sound. Therefore, a registered rhythm pattern corresponding to the name of the contents of a control " 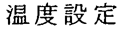 (ondosettê)" (temperature setting) is "x-xx-x".

A Japanese word " 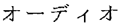 (ôdhio)" (audio player) is decomposed into moras " 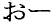 (ô)", " 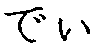 (dhi)" and " 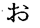 (o)". " 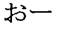 (ô)" is a prolonged sound. Therefore, a registered rhythm pattern corresponding to the name of the contents of a control " 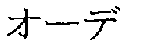 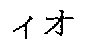 (ôdhio)" (audio player) is "x-xx".

As described above, a registered rhythm pattern is defined by dividing the name of the contents of a control into one or more mora units and assigning unit rhythm patterns to the mora units. This method of defining a rhythm pattern using divided mora units is suitable for languages, such as the Japanese language, in which words are pronounciated without taking care of accents. For example, when the word " 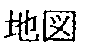 (chizu)" (map) is uttered, the beats are "tomtom". The beats are not changed no matter whether " 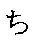 (chi)" or " 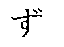 " has an accent. When the word " 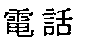 (denwa)" (telephone) is uttered, the beats are "tom·tom" where a rest is present between two beats. The beats are not changed no matter whether " 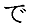 (de)" or " 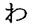 (wa)" has an accent. The same is true of the other examples.

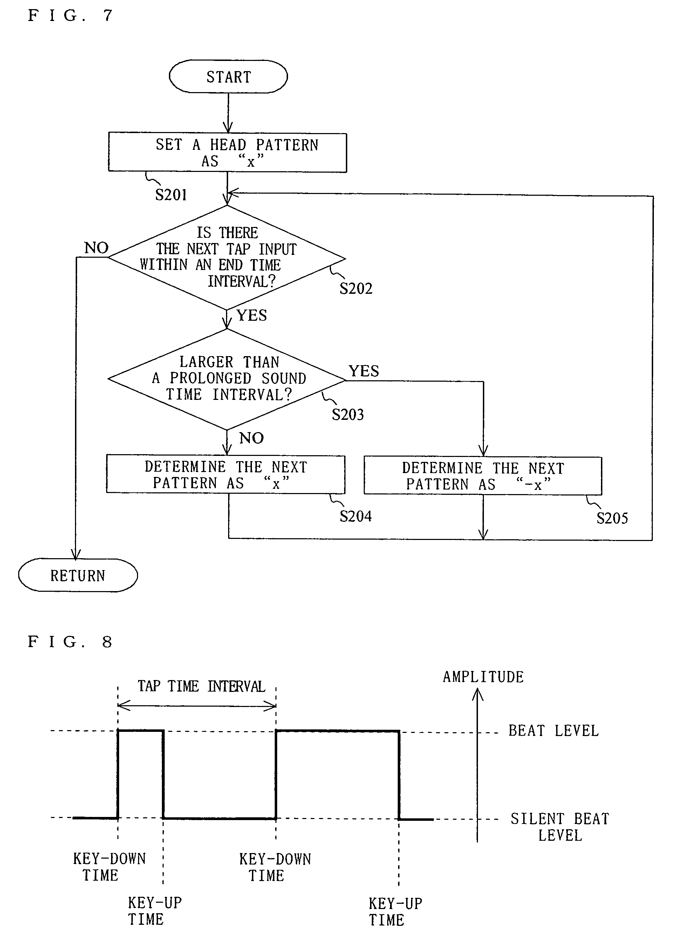

The control section 102 is composed of a CPU, a memory and the like. The control section 102 simplifies a temporal change in an amplitude level of an input rhythm signal input from the rhythm input section 101 to recognize an input rhythm pattern. This recognition method will be described elsewhere below (see FIG. 7). The control section 102 determines whether or not there is a registered rhythm pattern which matches the recognized input rhythm pattern, with reference to the rhythm dictionary table stored in the rhythm dictionary storage section 103. When there is a matching registered rhythm pattern, the control section 102 recognizes the name of the contents of a control corresponding to the registered rhythm pattern and controls an operation of an in-vehicle apparatus which performs the contents of the control.

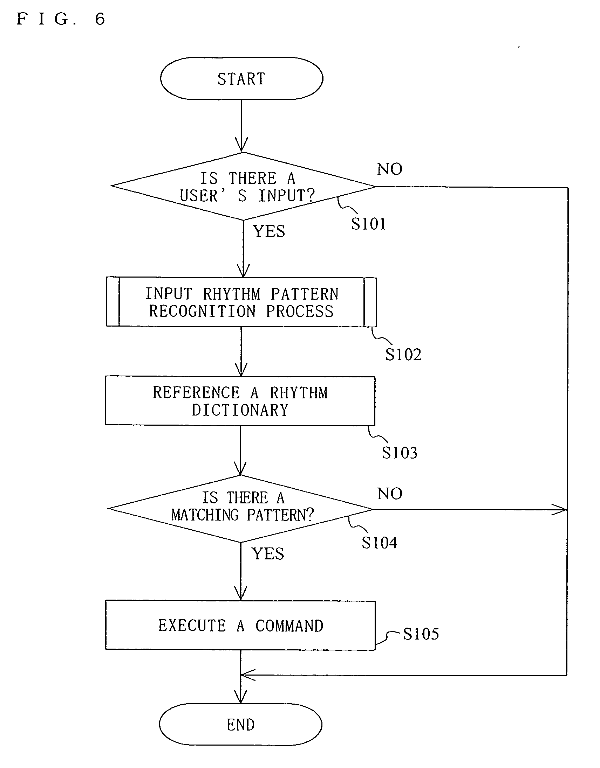

FIG. 6 is a flowchart showing an operation of the control section 102 when recognizing a rhythm input by the user tapping the rhythm input section 101 and controls an operation of an in-vehicle apparatus. Hereinafter, the operation of the control section 102 will be described with reference to FIG. 6.

Firstly, the control section 102 determines whether or not there is an input by the user, depending on whether or not an input rhythm signal is received from the rhythm input section 101 (step S101). When there is no input by the user, the control section 102 ends the process. On the other hand, when there is an input by the user, the control section 102 analyzes an input rhythm signal from the rhythm input section 101 to recognize an input rhythm pattern (step S102). The process for recognition of an input rhythm pattern will be described elsewhere below (see FIG. 7).

Next, the control section 102 references the rhythm dictionary table in the rhythm dictionary storage section 103 (step S103), and determines whether or not a registered rhythm pattern which matches the recognized input rhythm pattern is registered in the rhythm dictionary table (step S104).

When there is no matching registered rhythm pattern, the control section 102 ends the process. On the other hand, when there is a matching registered rhythm pattern, the control section 102 instructs an in-vehicle apparatus to perform the contents of a control corresponding to the registered rhythm pattern (step S105), and ends the process.

FIG. 7 is a flowchart showing a detailed operation of the control section 102 in the input rhythm pattern recognition process (step S102). Hereinafter, the operation of the control section 102 in the input rhythm pattern recognition process will be described with reference to FIG. 7.

Firstly, the control section 1 02 sets a head pattern as "x" (step S201). This setting is for detection of a time interval between the head and the next tap.

Next, the control section 1 02 determines whether or not the rhythm input section 101 is tapped within a predetermined end time interval (step S202). Specifically, the control section 102 performs the determination based on whether or not there is a pulse which reaches the beat level within the end time interval. Here, the end time interval refers to a threshold time such that when there is no user input during this time or more, the user is considered to finish inputting a rhythm. For example, the end time interval is predetermined to be 600 milliseconds or the like.

When the next tap is input within the end time interval, the control section 102 determines whether or not the tap time interval exceeds a predetermined prolonged sound time interval (step S203). Here, the prolonged sound time interval refers to a threshold for determining whether a tap having the elapsed tap time interval has one beat and one silent beat (two beats) or only one beat. For example, the prolonged sound time interval is predetermined to be 400 milliseconds.

When the tap time interval does not exceed the prolonged sound time interval, the control section 102 determines the next pattern as "x" (step S204) and returns to the operation of step S202. On the other hand, when the tap time interval exceeds the prolonged sound time interval, the control section 102 determines that the next pattern is "-x" (step S205), and returns to the operation of step S202.

On the other hand, in step S202, when no next tap is input within the end time interval, the control section 102 determines that the user finishes inputting, and recognizes a final input rhythm pattern in accordance with the pattern determined in steps S201, S204 and S205, and returns to the main operation of FIG. 6.

As described above, in the control system of the first embodiment, an input rhythm signal is output from the rhythm input section, corresponding to tapping by the user. The control section analyzes a temporal change in the amplitude of the input rhythm signal and simplifies the temporal change into the timing of a beat and the timing of a silent beat to recognize an input rhythm pattern. The control section determines whether or not a registered rhythm pattern which matches the recognized input rhythm pattern is registered in a rhythm dictionary table. When there is a matching registered rhythm pattern, the control section performs the contents of a corresponding control. Therefore, it is possible to provide a control system in which a small number of input devices are used to input an operation instruction without being affected by surrounding noise or the like, which interrupts speech recognition, and the contents of the operation instruction is reliably recognized so that operations of various apparatuses can be controlled by blind touch.

For example, there are not more than twenty to thirty kinds of contents of controls for operating in-vehicle apparatuses. Such a small number of contents of controls can be expected to be all represented by rhythm patterns. Therefore, it is possible to provide a control system which can perform reliably minimally required operations using a small number of input devices.

Further, in the first embodiment, a registered rhythm pattern is associated with a rhythm produced by uttering the name of the contents of a corresponding control. The contents of a control instinctively match a rhythm pattern. Therefore, it can be expected that rhythm patterns can be more easily input.

Further, in the first embodiment, when receiving a rhythm input by the user, the control system recognizes that there is an operation instruction by the user (see step S101). Therefore, it is no longer necessary for the user to switch the mode of a control system into a speech recognition mode, which is a burdensome operation required by speech recognition systems.

Further, in the first embodiment, a rhythm pattern can be determined only by comparing a tap time interval with the end time interval and the prolonged sound time interval. Therefore, a considerably simple algorithm can be used to recognize a rhythm pattern. Therefore, advantageously, the implementation is easy, and the sizes of a program and a memory which are consumed are considerably small.

Note that the registered names of the contents of controls are Japanese words in the above-described embodiment, and may be words of any language, such as English, German, French, Russian, Spanish, Chinese, Korean or the like. In these cases, rhythm patterns which typify pronunciation patterns produced by uttering the names of the contents of controls are registered as registered rhythm patterns.

Note that the end time interval and the prolonged sound time interval may be adjusted by initial setting by the user. Thereby, it is possible to absorb differences among individuals including a user having a high input speed and a user having a low input speed. For initial setting, the user may input a typical pattern, and thereafter, the control system may recognize automatically an end interval and a prolonged sound interval.

Note that a digital input device which continues to output an input rhythm signal having the HIGH level when pressed continuously may be used as a rhythm input section. FIG. 8 is a diagram showing a waveform of an input rhythm signal when this input device is used. As shown in FIG. 8, a time for which a beat level is attained varies depending on a time for which the rhythm input section is pressed. By pressing the rhythm input section continuously, the user can input a rhythm composed of a voiced sound and an unvoiced sound, such as an input prolonged sound, diphthong or the like. When an input rhythm pattern keeps the HIGH level for a predetermined time interval or more, the control section recognizes that the input rhythm pattern has a voiced sound and an unvoiced sound, i.e., a beat and a silent beat. Thereafter, the control section determines the matching of the input rhythm pattern and a registered rhythm pattern and controls an operation of an in-vehicle apparatus as in the above-described embodiment.

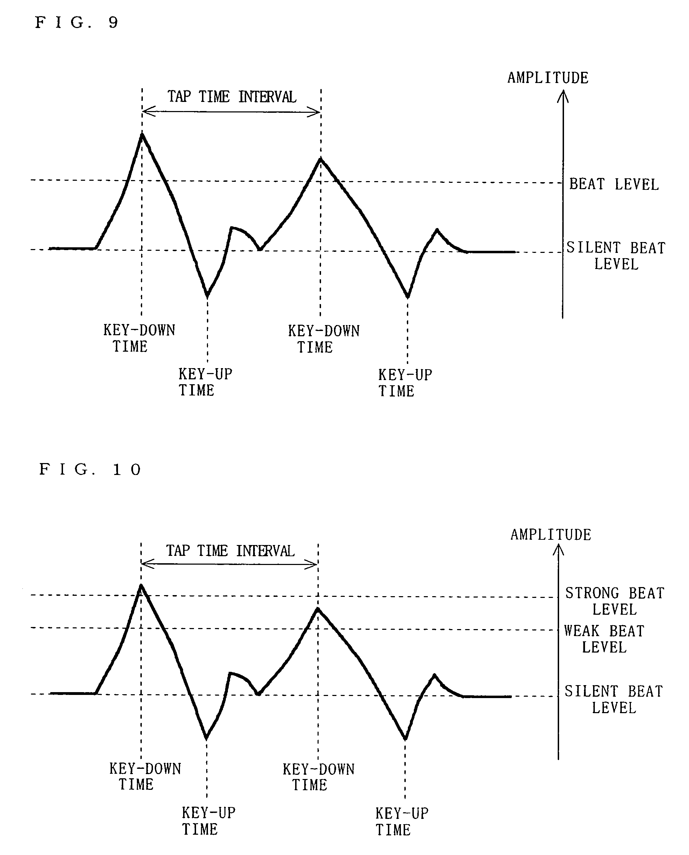

Although a digital input device is used as the rhythm input section 101 in the first embodiment, an analog input device, such as a piezoelectric sensor or the like, may be used. FIG. 9 is a diagram schematically showing a waveform of an input rhythm signal when an analog input device is used as the rhythm input section 101. When an analog input device is used as the rhythm input section 101, a beat level is predetermined. Since the rhythm input section 101 is an analog input device, an intensity level of the amplitude of an output signal thereof varies depending on tapping by the user as shown in FIG. 9. Here, a time at which the amplitude level of the waveform which exceeds the beat level and has a peak is referred to as a key-down time. Also, a time at which the amplitude level is lowest after the key-down time is referred to as a key-up time. A time between adjacent key-down times is referred to as a tap time interval. By defining the tap time interval in this manner, the control section can recognize a rhythm pattern in a manner similar to the rhythm pattern recognition of FIG. 7.

### (Second Embodiment)

A whole structure of a system according to a second embodiment of the present invention is similar to that of the first embodiment, and therefore, FIG. 1 is referenced in the second embodiment. Hereinafter, a difference between the first embodiment and the second embodiment will be mainly described.

In the second embodiment, the rhythm input section 101 is composed of an analog input device, such as a piezoelectric sensor or the like.

FIG. 10 is a diagram schematically showing a waveform of an input rhythm signal output from the rhythm input section 101 in the second embodiment. In the second embodiment, a strong beat level and a weak beat level are predetermined. Since the rhythm input section 101 is an analog input device, an amplitude level of an output signal thereof varies depending on tapping by the user as shown in FIG. 10. In the second embodiment, a time at which an amplitude level of the waveform which exceeds the strong or weak beat level and has a peak is referred to as a key-down time. Also, a time at which the amplitude level is lowest after the key-down time is referred to as a key-up time. A time between adjacent key-down times is referred to as a tap time interval.

In FIG. 10, when the amplitude level of an input rhythm signal exceeds the weak beat level, it is determined that a beat has occurred. When the amplitude level of an input rhythm signal is between the weak beat level and the strong beat level, it is determined that a weak beat has occurred. When the amplitude level of an input rhythm signal exceeds the strong beat level, it is determined that a strong beat has occurred.

In the second embodiment, a rhythm dictionary comprises a rule table which defines units for patterning the names of the contents of controls and a rhythm dictionary table for associating the names of the contents of controls with registered rhythm patterns.

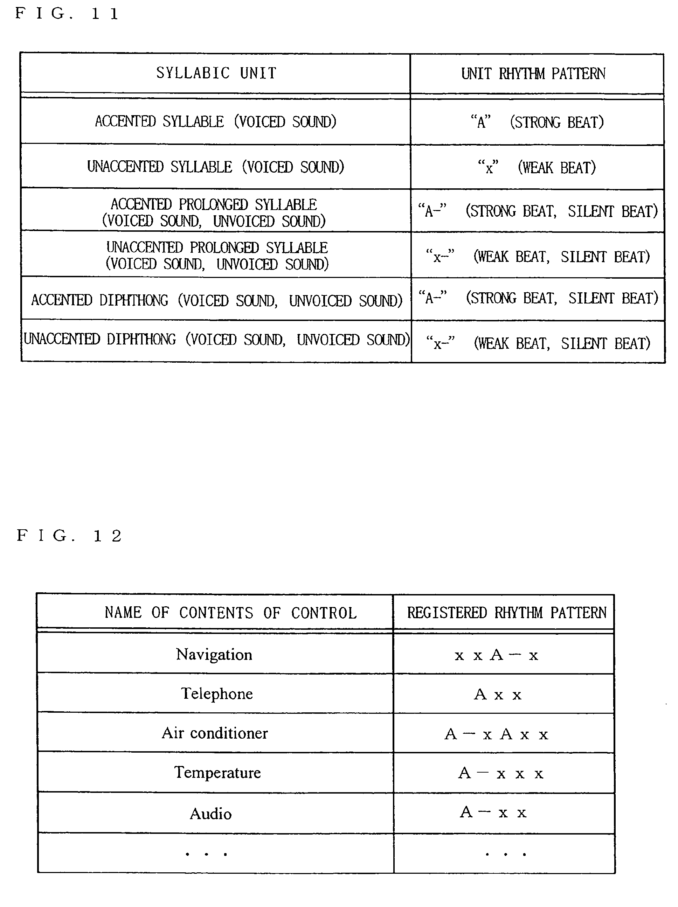

FIG. 11 is a diagram showing an example of the rule table. In the rule table, syllabic units of the English language are associated with unit rhythm patterns. Syllables are divided into six groups: accented syllables, unaccented syllables, accented prolonged syllables, unaccented prolonged syllables, accented diphthongs, and unaccented diphthongs.

In FIG. 11, a strong beat is represented by "A", a weak beat is represented by "x", and a silent beat is represented by "-". As shown in FIG. 11, an accented syllable is assigned a unit rhythm pattern "A". An unaccented syllable is assigned a unit rhythm pattern "x". An accented prolonged syllable is assigned a unit rhythm pattern "A-". An unaccented prolonged syllable is assigned a unit rhythm pattern "x-". An accented diphthong is assigned a unit rhythm pattern "A-". An unaccented diphthong is assigned a unit rhythm pattern "x-".

FIG. 12 is a diagram showing an example of the rhythm dictionary table. A registered rhythm pattern is defined by decomposing the name of the contents of a control into syllabic units and assigning the divided syllabic units respective corresponding unit rhythm patterns. Here, the name of the contents of a control is decomposed into syllabic units based on the phonetic symbols thereof.

For example, an English word "navigation" is decomposed into syllabic units: "na", "vi", "ga" and "tion". "na" and "vi" are unaccented syllables. "ga" is an accented diphthong. "tion" is an unaccented syllable. Therefore, a registered rhythm pattern which corresponds to the name of the contents of a control "navigation" is "xxA-x". For the names of the contents of other controls, registered rhythm patterns are defined similarly.

Next, an operation of the control section 102 of the second embodiment will be described. A main operation of the control section 102 when a rhythm is input by the user is similar to that of the first embodiment, and therefore, FIG. 6 is referenced. The second embodiment is different from the first embodiment in the input rhythm pattern recognition process.

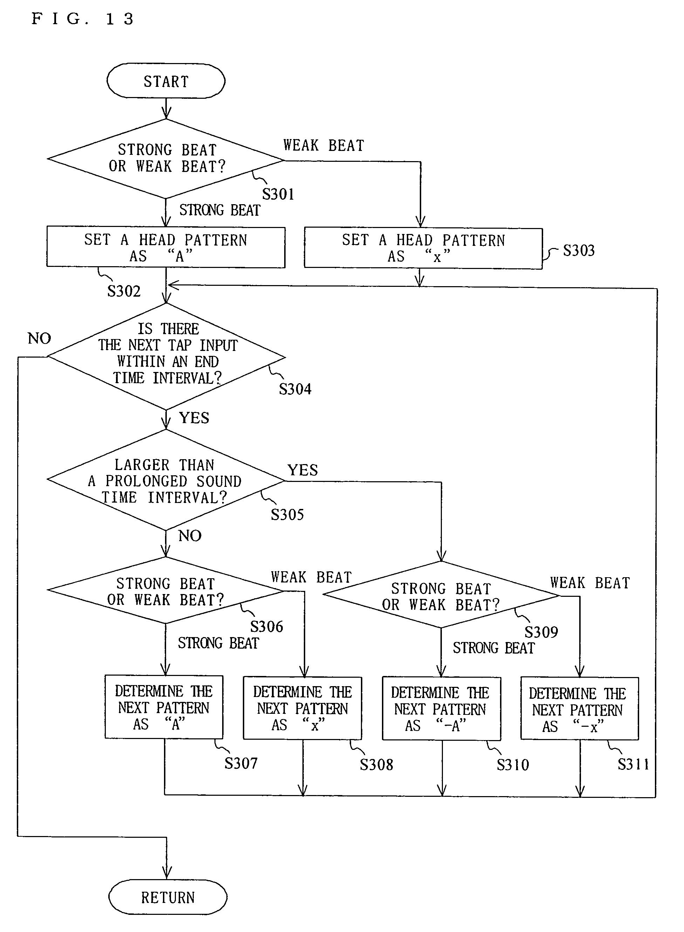

FIG. 13 is a flowchart showing a detailed operation of the control section 102 of the second embodiment in the input rhythm pattern recognition process. Hereinafter, the operation of the control section 102intheinputrhythm pattern recognition process will be described with reference to FIG. 13..

Firstly, the control section 102 determines whether a first amplitude peak of an input rhythm signal is a strong beat or a weak beat (step S301). When the first amplitude peak is a strong beat, the control section 102 sets ahead pattern as "A" (step S302), and goes to an operation of step S304. On the other hand, when the first amplitude peak is a weak beat, the control section 102 sets a head pattern as "x" (step S303), and goes to the operation of step S304.

In step S304, the control section 102 determines whether or not the rhythm input section 101 is tapped within a predetermined end time interval (step S305). Specifically, the control section 102 determines whether or not an electrical signal which exceeds the weak beat level is input within the end time interval. The end time interval is similar to that of the first embodiment.

In step S304, when the next tap is not input within the end time interval, the control section 102 determines that the user finishes inputting, and returns to the main operation of FIG. 6.

On the other hand, when the next tap is input within the end time interval, the control section 102 determines whether or not the tap time interval exceeds a predetermined prolonged sound time interval (step S305). The prolonged sound time interval is similar to the first embodiment.

When the tap time interval does not exceed the prolonged sound time interval, the control section 102 determines whether or not a peak of the amplitude level of the input rhythm signal at a key-down time is a strong beat or a weak beat (step S306). When the peak is a strong beat, the control section 1 02 determines the next pattern as "A" (step S307), and returns to the operation of step S304. On the other hand, when the peak is a weak beat, the control section 105 determines the next pattern as "x" (step S308), and returns to the operation of step S304.

On the other hand, when the tap time interval exceeds the prolonged sound time intervalin step S305, the control section 102 determines a peak of the amplitude level of the input rhythm signal at the key-down time is a strong beat or a weak beat (step S309). When the peak is a strong beat, the control section 102 determines the next pattern as "-A" (step S310), and returns to the operation of step S304. On the other hand, when the peak is a weak beat, the control section 102 determines the next pattern as "-x" (step S311), and returns to the operation of step S304.

As described above, in the second embodiment, to support a language with an accent, such as English or the like, the control system employs an analog input device to determine the intensity of a tap, and determines matching of a rhythm pattern with reference to a rhythm dictionary which defines rhythm patterns using syllables and accents. Therefore, also in languages, such as English and the like, it is possible to provide a control system in which a small number of input devices are used to input an operation instruction without being affected by surrounding noise or the like, which interrupts speech recognition, and the contents of the operation instruction are reliably recognized so that operations of various apparatuses can be controlled by blind touch.

Note that, in the control system, the name of the contents of a control in the Japanese language may be decomposed into syllables to define a rhythm dictionary, which is used to recognize matching of a rhythm pattern. In this case, the position of an accent may, or may not, be determined.

Note that a method of recognizing a rhythm pattern is not limited to the above-described recognition method. The tap time interval may be defined as a time between adjacent key-up times. Further, the intensity of an amplitude may be defined more finely (stepwise) instead of two levels (strong and weak).

### (Third Embodiment)

A whole structure of a system according to a third embodiment of the present invention is similar to that of the first embodiment, and therefore, FIG. 1 is referenced in the third embodiment. In the third embodiment, the rhythm input section 101 may be either a digital input device or an analog input device.

Hereinafter, an operation of a control section 102 of the third embodiment will be described. A main operation of the control section 102 when a rhythm is input by the user is similar to that of the first embodiment, and therefore, FIG. 6 is referenced. The third embodiment is different from the first embodiment in the input rhythm pattern recognition process.

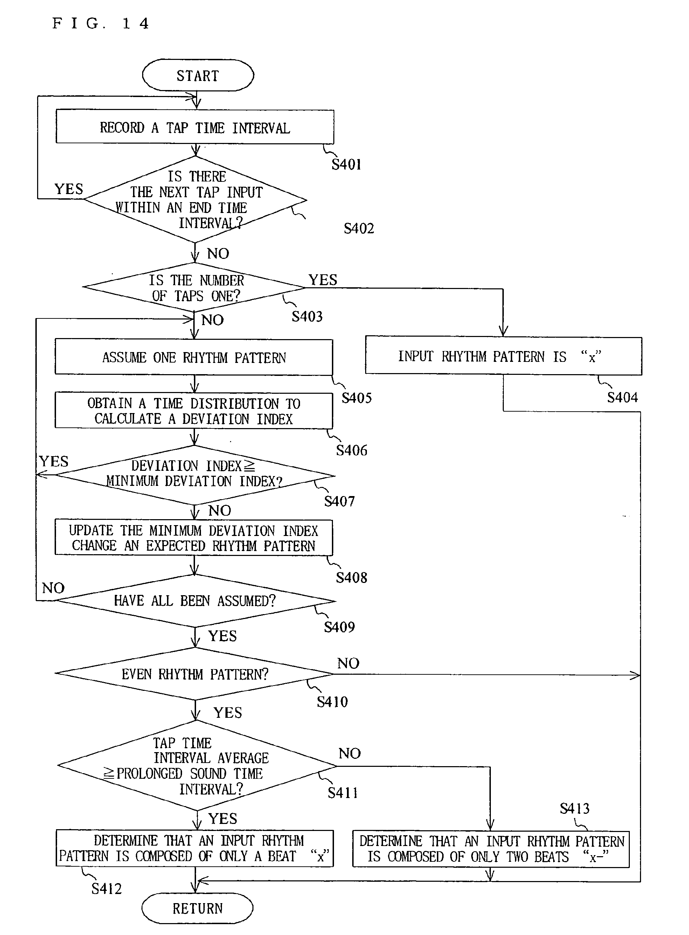

FIG. 14 is a flowchart showing a detailed operation of the control section 102 of the third embodiment in the input rhythm pattern recognition process. Hereinafter, the operation of the control section 102 in the input rhythm pat tern recognition process will be described with reference to FIG. 14.

Firstly, when receiving an input rhythm signal from the rhythm input section 101, the control section 102 measures and memorizes a key-down time, and measures and memorizes an elapsed time from the previous key-down time (tap time interval) (step S401). Here, when a key-down time occurs for the first time, the control section 102 cannot measure a tap time interval, and goes directly to the operation of step S401. The control section 102 is assumed to memorize tap time intervals as an array Ti.

Next, the control section 1 02 determines whether or not the next tap is input within a predetermined end time interval, based on an amplitude level of an input rhythm signal (step S402). Specifically, the control section 102 performs the determination based on whether or not a key-down time occurs within the end time interval. Here, the end time interval is similar to that of the first embodiment.

When the next tap is input within the end time interval, the control section 102 returns to the operation of step S401. On the other hand, when the next tap is not input within the end time interval (i.e., the user finishes inputting a rhythm), the operation of the control section 102 goes to step S403.

In step S403, the control section 102 determines whether or not the number of times of occurrence of a key-down time (hereinafter referred to as the number of taps) is one, with reference to the information memorized in step S401. When the number of taps is one, the control section 102 determines that the input rhythm pattern is "x" (step S404), and returns to the main operation of FIG. 6. On the other hand, when the number of taps is not one, the control section 102 goes to the operation of step S405.

In step S405, the control section 102 assumes a rhythm pattern corresponding to the number of taps (step S405). Here, a rhythm pattern within one tap time interval is assumed to have only one beat (i.e., "x") or two beats (i.e., "x-" representing a beat and a silent beat). The last pattern is inevitably "x". Therefore, when the number of taps is N, the number of all possible rhythm patterns is 2 to the power of N-1. For example, when the number of taps is N=5, the number of all possible rhythm patterns is 2 to the power of 4, i.e., 16.

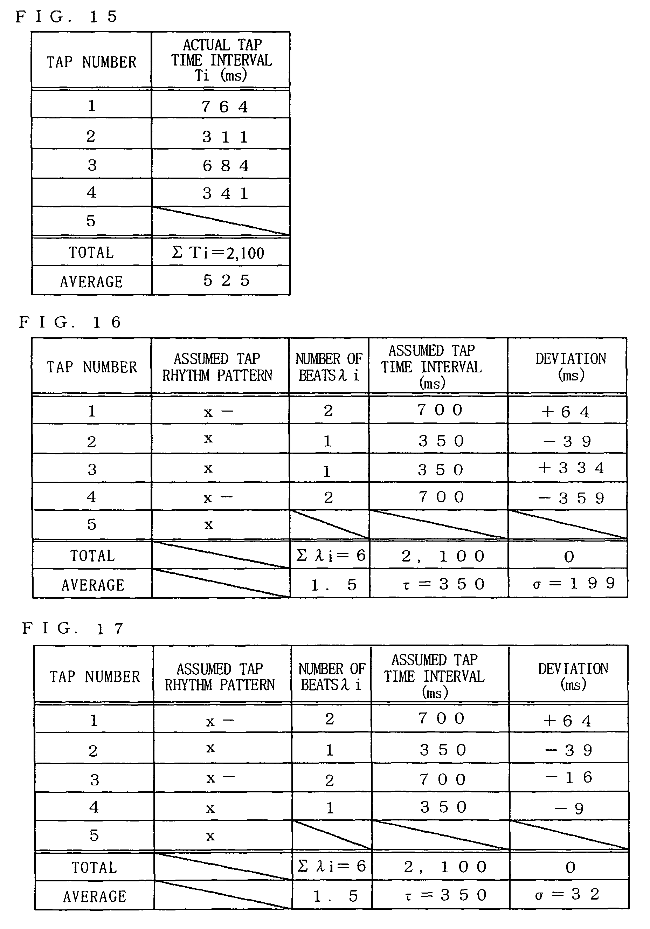

Next, the control section 102 obtains a time distribution of the assumed rhythm pattern, and calculates how much an actually measured tap time interval is deviated from the obtained time distribution (step S406). A process in step S406 will be described in detail with reference to FIGS. 15 to 17.

FIG. 15 is a diagram showing an example of the array Ti of tap time intervals memorized in step S401. In the example of FIG. 15, the tap time interval array Tiregistersactuallymeasured tap time intervals (ms) associated with tap numbers. Here, a tap number indicates the ordinal number of a tap. For example, a tap time interval corresponding to a tap number "1" indicates a tap time interval from a first key-down time of an input rhythm signal to the next key-down time. In other words, a tap time interval corresponding to each tap number indicates an elapsed time from the key-up time of a tap number to the key-down time of the next tap number. Therefore, there is no tap time interval corresponding to the last tap number ("5" in FIG. 15).

FIG. 16 is a diagram showing an example of the time distribution when the rhythm pattern assumed in step S405 is not appropriate. FIG. 17 is a diagram showing an example of the time distribution when the rhythm pattern assumed in step S405 is appropriate. Hereinafter, a method of obtaining the time distribution of the assumed rhythm pattern will be described with reference to FIGS. 16 and 17.

Firstly, the control section 102 assumes one rhythm pattern. In FIG. 16, for example, "x-xxx-x" is assumed. Next, the control section 1 02 counts the number of beats of the assumed rhythmpattern for each tap number and calculates the total Σλi. Here, the control section 102 counts "x" as one beat and "x-" as two beats. In the example of FIG. 16, the total Σλi of the number of beats of the assumed rhythm pattern is "6".

Next, the control section 102 obtains a total ΣTi of actual tap time intervals. In the example of FIG. 15, the total ΣTi of actual tap time intervals is "2100 (ms)".

Next, the control section 102 divides the total ΣTi of actual tap time intervals by the total Σλi of the number of beats to obtain a value τ. That is, τ=ΣTi/Σλi. In the example of FIG. 16, τ=2100/6=350 (ms). The value τ is a required time per beat in the assumed rhythm pattern. The control section 102 multiplies the value τ by the number of beats of each tap number to obtain a tap time interval for the tap number. In the example of FIG. 15, a tap time interval assumed for the tap number "1" is 350 (ms)×2=700 (ms). A tap time interval assumed for the tap number "2" is 350 (ms)×1=350 (ms).

Next, the control section 102 obtains a deviation (ms) between an actual tap time interval and an assumed tap time interval for each tap number. In the example of FIG. 15, an actual tap time interval for the tap number "1" is 764 (ms). In the example of FIG. 16, an assumed tap time interval for the tap number "1" is 700 (ms). Therefore, the deviation is +64 (ms).

Next, the control section 102 sums the absolute value of the deviation in each tap number (except for the last tap number) to obtain an average value σ. That is, σ=Σ|Ti-τ*λi|. In the example of FIG. 16, σ= (64+39+334+359)/4=199. In the example of FIG. 17, σ=(64+39+16+9)/4=32. σ is a value indicating a deviation of the distribution of actually measured tap time intervals from the distribution of tap time intervals in the assumed rhythm pattern. In other words, σ is an index for the validity of the assumed rhythm pattern. The smaller the value σ, the larger the validity of the assumed rhythm pattern. Hereinafter, σ is referred to as a deviation index.

When a rhythm pattern, such as that shown in FIG. 16, is assumed, the deviation index σ is 119. On the other hand, when a rhythm pattern, such as that shown in FIG. 17, is assumed, the deviation index σ is 32. Therefore, the rhythm pattern of FIG. 17 is expected to be closer to a rhythm pattern actually input by the user than the rhythm pattern of FIG. 16.

Referring back to FIG. 14, an operation of the control section 102 will be described.

As described above, after obtaining a deviation index between an actual tap time interval and a tap time interval based on an assumed rhythm pattern, the control section 102determineswhether or not the deviation index calculated in step S406 exceeds a minimum deviation index (step S407). Here, the minimum deviation index refers to a smallest one of the deviation indexes of rhythmpatterns which have been assumed up to the current time.

When a deviation index does not exceed the minimum deviation index, the control section 102 memorizes this deviation index as a minimum deviation index, and memorizes a rhythm pattern having the deviation index as an expected rhythm pattern (step S408), and goes to an operation of step S409. Note that, when a rhythm pattern is initially assumed, the control section 102 memorizes no minimum deviation index, and therefore, inevitably goes to the operation of step S408.

On the other hand, when a deviation index exceeds the minimum deviation index, the control section 102 does not update the minimum deviation index, and returns to the operation of step S405 and another rhythm pattern is assumed.

In step S409, the control section 102 determines whether or not all possible rhythm patterns have been assumed. When all possible rhythm patterns have not been assumed, the control section 102 returns to the operation of step S405 and assumes another rhythmpattern. By returning to the operation of step S405 in this manner, the control section 102 obtains a rhythm pattern having the minimum deviation index σ among all possible assumed rhythm patterns.

On the other hand, when all possible rhythm patterns have been assumed, the control section 102 determines whether or not an expected rhythm pattern having the minimum deviation index is an even rhythm pattern (step S410). Here, the even rhythm pattern refers to a rhythm pattern which is composed of tap time intervals each having the same number of beats, such as "xxx", "x-x-x" or the like.

When the expected rhythm pattern is not an even rhythm pattern, the control section 102 determines that the expected rhythm pattern is an input rhythm pattern recognized from an input rhythm signal and returns to the main operation of FIG. 6. Thereafter, the control section 102 determines matching of the input rhythm pattern and a registered rhythm pattern to control an operation of an in-vehicle apparatus.

On the other hand, when the expected rhythm pattern is an even rhythm pattern, the control section 102 cannot determine whether an actual rhythm pattern is an even rhythm pattern composed of "x" or "x-". This is because all even rhythm patterns have the same deviation index.

Therefore, the control section 102 obtains an average value of tap time intervals, and determines whether or not the average value is within a prolonged sound time interval (step S411). Here, the prolonged sound time interval is similar to that of the first embodiment.

When the average value of tap time intervals is within the prolonged sound time interval, the control section 102 finally recognizes a rhythm pattern composed of only rhythms all having one beat (i.e., the beat "x") as an input rhythmpattern (step S412), and returns to the main operation of FIG. 6.

On the other hand, when the average value of tap time intervals is greater than the prolonged sound time interval, the control section 102 finally recognizes a rhythm pattern composed of only rhythms all having two beats (i.e., a beat + a silent beat "x-", except that only the last rhythm is "x") as an input rhythm pattern (step S413), and returns to the main operation of FIG. 6.

As described above, the control system assumes all possible rhythm patterns and compares a distribution of tap time intervals in an actual input rhythm signal with a distribution of tap time intervals in the assumed rhythm pattern to obtain a deviation of the assumed rhythm pattern from the actual input rhythm signal. The control system recognizes one of the assumed rhythm patterns which has the smallest deviation, as an input rhythm pattern.

As described above, in the third embodiment, the control system recognizes an input rhythm pattern by considering a total sum of tap time intervals. Therefore, it is possible to recognize an input rhythm pattern by considering the whole rhythm thereof irrespective of the tempo thereof. Therefore, the control system can absorb differences among individual users to recognize an input rhythm pattern. Therefore, it is possible to control an operation of each apparatus more reliably as compared to when an input rhythm pattern is recognized by simply comparing a tap time interval with a prolonged sound interval.

Note that the end interval, and the prolonged sound interval for determining a final rhythm pattern in the case of an even rhythm pattern, may be adjusted by initial setting by the user.

Although, in the third embodiment, all possible rhythm patterns are assumed from the number of taps, and a rhythm pattern which best matches a tendency of a temporal change in an actual input rhythm signal is recognized as an input rhythm pattern, a method of determining matching of the tendency of the temporal change is not limited to this. For example, the control section may search all registered rhythm patterns in the rhythm dictionary table for one which best matches the tendency of a temporal change in an actual input rhythm signal and recognize the best matching registered rhythm pattern as an input rhythm pattern. Alternatively, the control section may search only registered rhythm patterns having a matching number of taps for one which best matches the tendency of a temporal change in an actual input rhythm signal and recognize the best matching registered rhythm pattern as an input rhythm pattern. Here, a method of examining the tendency of the temporal change may be a method of comparing deviation indexes as described above.

### (Fourth Embodiment)

A whole structure of a system according to a fourth embodiment of the present invention is similar to that of the first embodiment, and therefore, FIG. 1 is referenced in the fourth embodiment. In the fourth embodiment, the rhythm input section 101 may be either a digital input device or an analog input device.

Hereinafter, an operation of the control section 102 of the fourth embodiment will be described. A main operation of the control section 102 when a rhythm is input by the user is similar to that of the first embodiment, and therefore, FIG. 6 is referenced. The fourth embodiment is different from the first embodiment in the input rhythm pattern recognition process.

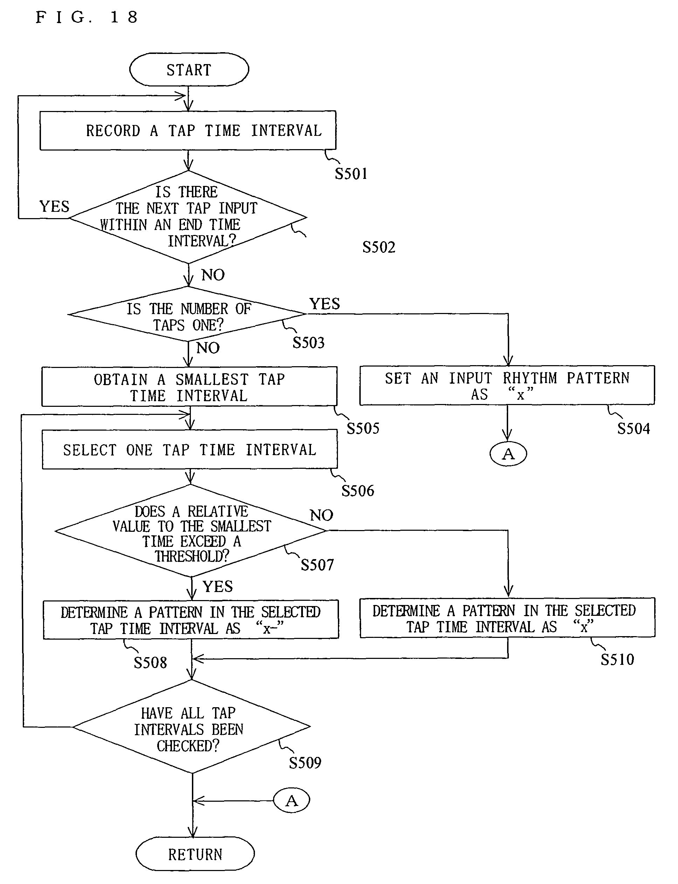

FIG. 18 is a flowchart showing a detailed operation of the control section 102 of the fourth embodiment in the input rhythm pattern recognition process. Hereinafter, the operation of the controlsection 102 in the input rhythm pattern recognition process will be described with reference to FIG. 18.

Firstly, the control section 102 memorizes a tap time interval as in the third embodiment (step S501) to determine whether or not the next tap is input (step S502). When the next tap is input, the control section 102 returns to the operation of step S501. On the other hand, when the next tap is not input (i.e., the user finishes inputting a rhythm), the control section 102 goes to an operation of step S503 to analyze a rhythm pattern.

In step S503, the control section 102 determines whether or not the number of taps is one. When the number of taps is one, the control section 102 recognizes that the input rhythm pattern is "x", and returns to the main operation of FIG. 6.

On the other hand, when the number of taps is not one, the control section 102 obtains a smallest one of the obtained tap time intervals (step S505). Next, the control section 102 selects only one tap time interval from the measured tap time intervals sequentially from the head (step S506). Next, the control section 102 obtains relative values of the selected tap time intervals where the smallest tap time interval is represented by 1 and determines whether or not the relative value exceeds a predetermined threshold (step S507). The predetermined threshold is a relative value of a value obtained by adding a beat time and a silent beat time (e.g., 2).

When the relative value exceeds the predetermined threshold, the control section 102 determines the pattern of the selected tap time interval as "x-" (step S508), and goes to an operation of step S509. On the other hand, when the relative value does not exceeds the predetermined threshold, the control section 102 determines the pattern of the selected tap time interval as "x" (step S510), and goes to the operation of step S509.

For example, when a smallest tap time interval is 300 (ms) and a certain tap time interval is 660 (ms), the relative value is 660/300=2.2. Assuming that the predetermined threshold is 2, a rhythm pattern having the elapsed tap time interval 660 (ms) is determined to be "x-".

In step S509, the control section 102 determines whether or not all of the measured tap time intervals have been subjected to the relative value threshold test. When not all of the measured tap time intervals have been subjected to the relative value threshold test, the control section 102 returns to the operation of step S506 and compares the next tap time interval with the smallest tap time interval. On the other hand, when all of the measured tap time intervals have been subjected to the relative value threshold test, the control section 102 determines an input rhythm pattern based on the pattern determined in step S508 and/or S51 0, returns to the main operation of FIG. 6 to determine matching of a registered rhythm pattern, and controls an in-vehicle apparatus.

As described above, in the fourth embodiment, the control system obtains the relative value of each tap time interval where the smallest tap time interval is 1 to determine whether or not there is a silent beat in the tap time interval. Therefore, it is possible to recognize a rhythm pattern by considering the whole rhythm thereof irrespective of the tempo thereof. Therefore, the control system can absorb differences among individual users to recognize an input rhythm pattern. Therefore, it is possible to control an operation of each apparatus more reliably as compared to when an input rhythm pattern is recognized by simply comparing a tap time interval with a prolonged sound interval.

### (Fifth Embodiment)

A whole structure of a system according to a fifth embodiment of the present invention is similar to that of the first embodiment, and therefore, FIG. 1 is referenced in the fifth embodiment. In the fifth embodiment, the rhythm input section 101 is assumed to be composed of an analog input device. Also in the fifth embodiment, the position of an accent is used for recognition of a rhythmpattern. A rhythm dictionary, such as that of FIGS. 11 and 1 2, which defines the strong and weak levels as well, is used.

Hereinafter, an operation of the control section 102 according to the fifth embodiment will be described. A main operation of the control section 102 when a rhythm is input by the user is similar to that of the first embodiment, and therefore, FIG. 6 is referenced. The fifth embodiment is different from the first embodiment in the input rhythm pattern recognition process.

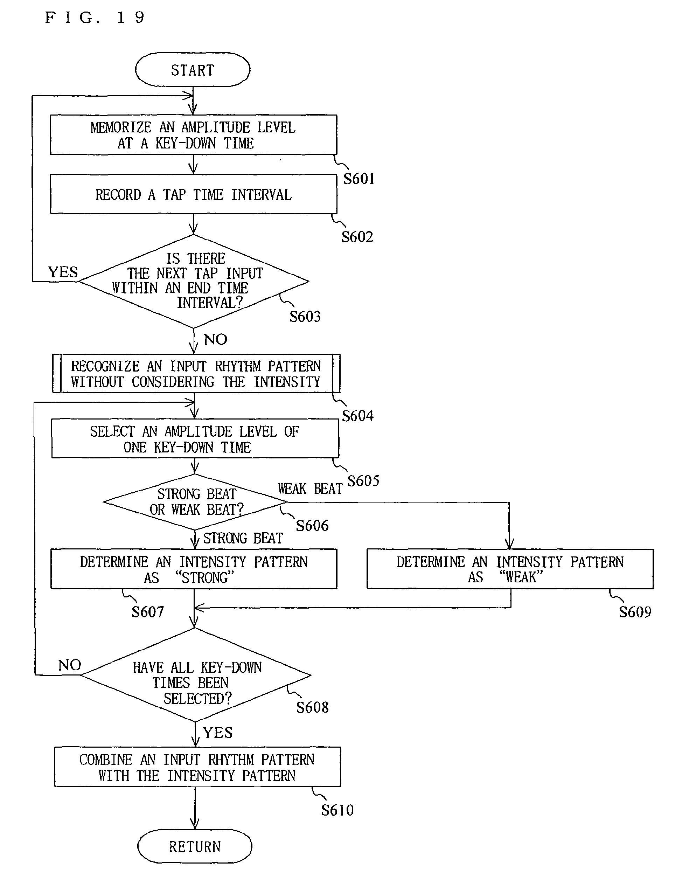

FIG. 19 is a flowchart showing a detailed operation of the control section 102 of the fifth embodiment in the input rhythm pattern recognition process will be described. Hereinafter, the operation of the control section 102 in the input rhythm pattern recognition process will be described with reference to FIG. 19.

Firstly, the control section 102 receives an input rhythm signal from a rhythm input section 101, and memorizes an amplitude level at a key-down time (step S601). Next, the control section 102 measures and memorizes a tap time interval (step S602). Note that, when a key-down time occurs for the first time, the control section 102 does not measure a tap time interval and goes to the next operation.

Next, the control section 102 determines whether or not the next tap is input within an end time interval (step S603). When the next tap is input, the control section 102 returns to the operation of step S601. When the next tap is not input, the control section 102 goes to an operation of step S604.

In step S604, the control section 102 recognizes an input rhythm pattern without considering the intensity of a tap. Here, an algorithm for recognizing an input rhythm pattern may be the same as that of any of the above-described first, third and fourth embodiments.

Next, the control section 102 selects an amplitude level at each key-down time of the input rhythm signal sequentially from the head thereof (step S605), and determines whether or not the amplitude level indicates a strong beat or a weak beat (step S606).

When the amplitude level indicates a strong beat, the control section 102 determines a strong/weak pattern as "strong" (step S607), and goes to an operation of step S608. Here, the strong/weak pattern refers to a pattern which indicates a beat portion of the input rhythm pattern recognized in step S604 is a strong beat or a weak beat. On the other hand, when the amplitude level indicates a weak beat, the control section 102 determines the strong/weak pattern as "weak" (step S609) and goes to the operation of step S608.

In step S608, the control section 102 determines whether or not all key-down times have been selected. When all key-down times have not been selected, the control section 102 returns to the operation of step S605 and determines the next strong/weak pattern. On the other hand, when all key-down times have been selected, the control section 102 combines the input rhythm pattern recognized in step S604 with the strong/weak pattern recognized in steps S607 and S609 to determine a final input rhythm pattern (step S610), returns to the main operation of FIG. 6, determines whether or not there is a matching rhythm pattern with reference to a rhythm dictionary defining intensities, and controls an operation of an in-vehicle apparatus.

The combination of the input rhythm pattern and the strong/weak pattern in step S610 is performed by assigning a strong/weak pattern to each beat portion of the rhythm pattern sequentially from the head thereof. For example, when the input rhythm pattern is "x-xxxx" and the strong/weak pattern "strong-weak-strong-weak-weak", the control section 102 assigns "strong" or "weak" to the beat portions of the input rhythm pattern sequentially. When the beat portion is "strong", the pattern is changed to "A". In this combination, the control section 102 can recognize a final input rhythm pattern "A-xAxx".

As described above, in the fifth embodiment, an input rhythm pattern can be recognized in association with the intensity of a beat. Particularly, by combining the input rhythm pattern recognition process of the fifth embodiment with those of the third and fourth embodiments, the control system can recognize a rhythm pattern in association with the intensity thereof by considering the whole rhythm thereof irrespective of the tempo thereof.

Note that the intensity of a beat also varies among individuals, and therefore, the control system may determine the intensities of beats relatively with reference to the lowest or highest beat level.

### (Sixth Embodiment)

A pronunciation pattern may vary from user to user, and therefore, an input rhythm pattern may also vary from user to user. In a sixth embodiment, a rhythm dictionary in which a different rhythm pattern is registered for each user and a system in which the user can edit a registered rhythm pattern to match the user's input rhythm pattern will be described.

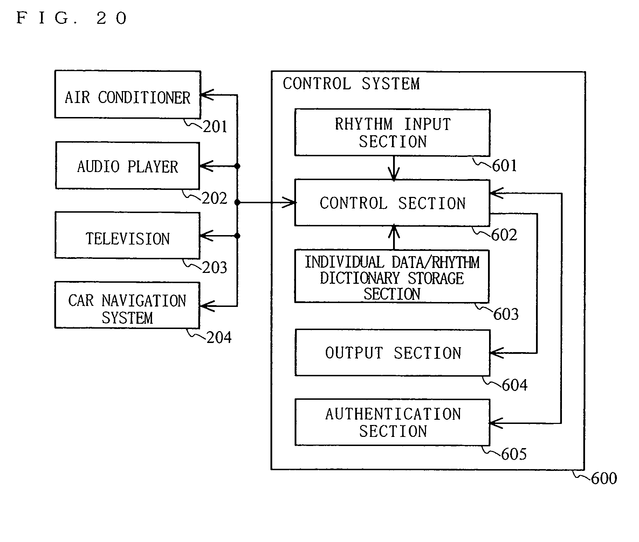

FIG. 20 is a diagram showing a whole structure of a control system 600 according to the sixth embodiment of the present invention and a system to which the control system 600 is applied. In FIG. 20, portions similar to those of the first embodiment are indicated with the same reference numerals and will not be explained.

In FIG. 20, the whole system comprises the control system 600, an air conditioner 201, an audio player 202, a television 203, and a car navigation system 204. The control system 600 includes a rhythm input section 601, a control section 602, a personal data/rhythm dictionary storage section 603, an output section 604, and an authentication section 605.

The rhythm input section 601 may be either a digital input device or an analog input device.

The personal data/rhythm dictionary storage section 603 is composed of a memory device, such as a RAM, a ROM, a hard disk or the like. The personal data/rhythm dictionary storage section 603 stores, for each user, a rhythm dictionary table, a parameter required for recognition of an input rhythm pattern, and setting information about a feedback method.

Here, the rhythm dictionary tables which are different from that of each other user are defined by the user previously registering rhythm patterns in association with the names of the contents of controls. The parameter required for recognition of an input rhythm pattern (hereinafter referred to as a recognition parameter) refers to information required for detection of a temporal change in an input rhythm signal, such as a threshold for beat and silent beat levels (see FIGS. 3 and 9), a threshold for strong beat and weak beat levels (see FIG. 10), a prolonged sound time interval, an end time interval, and the like.

The setting information about a feedback method (hereinafter referred to as feedback setting information) refers to information indicating whether contents to be fed back to the user are screen display, voice output, or vibration.

The output section 604 is composed of a screen apparatus (e.g., a display, etc.), a voice apparatus (e.g., a loudspeaker, an amplifier, etc.), a vibration apparatus (e . g. , a vibrator, etc.), or the like, i.e. , the output section 604 is a sensation apparatus for giving a certain stimulus to the five senses of the user.

The authentication section 605 is an apparatus for authenticating an individual user, whose structure varies depending on the authentication method. Examples of the authentication method include a method of authentication using a password input by the user, a method of authentication by recognition of an image (e.g., a face, an iris, a fingerprint, etc.), a method of authentication using input handwriting or voice, and the like. In this embodiment, security is not particularly taken into consideration, and therefore, only an authentication method such that, for example, the user simply selects his/her own name from a user list before use, is used. The authentication section 605 authenticates and identifies the user in response to a request from the control section 602, and returns the result to the control section 602.

The control section 602 is composed of a CPU, a memory and the like. The control section 602 identifies the user based on information from the authentication section 605, and analyzes, for each user, an input rhythm signal output by the rhythm input section 601 with reference to the recognition parameter stored in the personal data/rhythm dictionary storage section 603 to recognize an input rhythm pattern. An algorithm for recognizing an input rhythm pattern may be any of the algorithms used in the above-described first to fifth embodiments. The control section 602 references user-specific rhythm dictionary tables stored in the personal data/rhythm dictionary storage section 603 to determine whether or not there is a registered rhythm pattern which matches the recognized input rhythm pattern. When there is a matching registered rhythm pattern, the control section 602 feeds a result of the determination via the output section 604 back to the user and controls an operation of an in-vehicle apparatus.

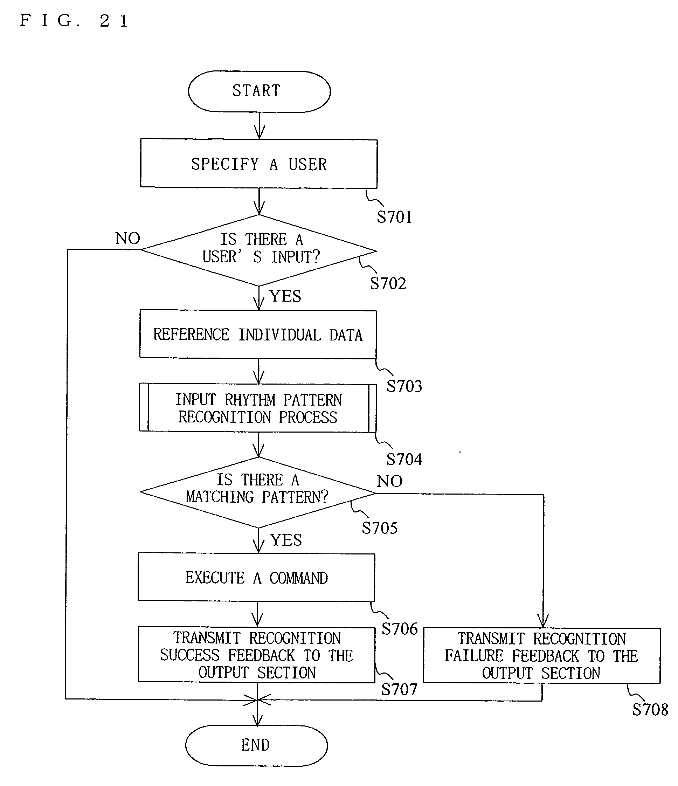

FIG. 21 is a flowchart showing an operation of the control section 602 in which the control section 602 recognizes a rhythm input by the user tapping the rhythm input section 601 to control an operation of an in-vehicle apparatus. Hereinafter, the operation of the control section 602 will be described with reference to FIG. 21.

Firstly, the control section 602 requests the authentication section 605 to identify and authenticate an individual user, and receives a result of the authentication (step S701). Next, the control section 602 determines whether or not there is an input by the user based on whether or not an electrical signal is received from the rhythm input section 601 (step S702). When there is no input by the user, the control section 602 ends the process. On the other hand, there is an input by the user, the control section 602 references a recognition parameter relating to the identified user from the personal data/rhythm dictionary storage section 603 (step S703), and goes to an operation of step S704.

In step S704, the control section 602 recognizes a rhythm pattern based on the input rhythm signal from the rhythm input section 601 and the referenced recognition parameter. An algorithm for recognizing a rhythm pattern may be any of the algorithms used in the above-described first to fifth embodiments. The control section 602 can use a user-specific recognition parameter to absorb differences among individuals in the timing or intensity of beat, thereby recognizing an input rhythm pattern.

Next, the control section 602 determines whether or not a registered rhythm pattern which matches the recognized input rhythm pattern is registered in the rhythm dictionary table of the user (step S705). When there is a matching registered rhythm pattern, the control section 602 performs the contents of a control corresponding to the rhythm pattern to control an operation of an in-vehicle apparatus (step S706), and outputs a feedback signal indicating the success of the control along with feedback setting information to the output section 604 (step S707) and ends the process. On the other hand, when there is no matching registered rhythm pattern, the control section 602 outputs a feedback signal which indicates the failure of the recognition along with feedback setting information to the output section 604 (step S708), and ends the process. The output section 604 informs the user of whether or not the recognition has been successful, using voice, video, vibration or the like, based on the feedback signal and the feedback setting information from the control section 602.

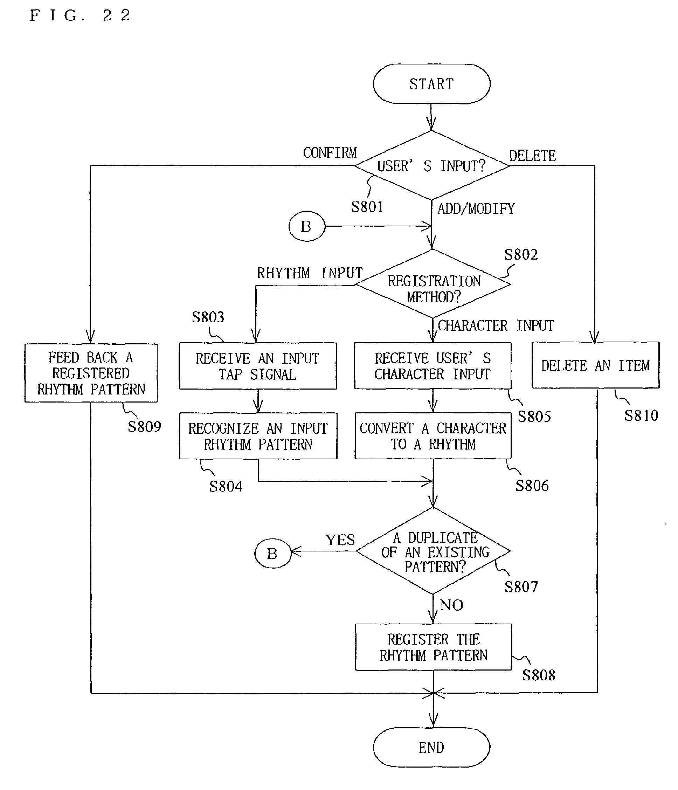

FIG. 22 is a flowchart showing an operation of the control section 602 when the user confirms/edits the contents of a rhythm dictionary table. Hereinafter, the operation of the control section 602 when the user confirms/edits the contents of a rhythm dictionary table will be described with reference to FIG. 22.

Firstly, when starting confirming/editing a rhythm dictionary, the control section 602 displays options, such as "ADD/MODIFY", "CONFIRM", "DELETE" and the like, on a screen of the output section 604 and causes the user to select an item (step S801).

In step S801, when the user selects "ADD", the control section 602 displays options, such as "INPUT BY CHARACTER", "INPUT BY RHYTHM" and the like, on the screen of the output section 604, and waits for an input by the user (step S802).

In step S802, when the user selects INPUT BY RHYTHM, the control section 602 receives an input rhythm signal from the rhythm input section 601 (step S803), recognizes an input rhythm pattern (step S804), and goes to an operation of step S807. An algorithm for recognition of an input rhythm pattern in step S804 is any of the algorithms described in the first to fifth embodiments.

In step S802, when the user selects INPUT BY CHARACTER, the control section 602 receives characters input by the user via a character input section (not shown), such as a keyboard, a speech recognition section or the like (step S805), and converts the characters into a rhythm pattern (step S806), and goes to the operation of step S807. In step S806, as shown in the first or second embodiment, the control section 602 divides the input characters into predetermined units and assigns the divided units respective predetermined unit rhythm patterns, thereby converting the input characters into a rhythm pattern.

In step S807, the control section 602 checks whether or not the rhythm pattern determined in step S804 or S806 is a duplicate of an existing registered rhythm pattern stored in the personal data/rhythm dictionary storage section 603. The number of possible rhythm patterns is infinite, so that there may be a duplicate rhythm pattern. Therefore, the control section 602 performs determination, such as that of step S807.

When there is a duplicate registered rhythm pattern, the control section 602 returns to step S802, and prompts the user to enter an input again. On the other hand, when there is no rhythm pattern, the control section 602 registers a new rhythm pattern and the contents of a new control into the personal data/rhythm dictionary storage section 603 (step S808), and ends the process. Note that, when MODIFY is performed, the control section 602 changes a rhythm pattern corresponding to the registered name of the contents of a control to a new rhythm pattern. In this case, the user may specify the contents of the control or the control section 602 causes the user to select the contents of the control. Thus, the control section 602 causes the user directly to tap a rhythm to register a rhythm pattern, or causes the user to input characters to register a rhythm pattern, thereby editing the registered contents of a rhythm dictionary table.

Back to the description of the operations of step S801 and thereafter. In step S801, when the user selects "CONFIRM", the control section 602 uses the output section 604 to cause the user to sense a selected registered rhythm pattern (step S809), and ends the process. Specifically, the output section 604 displays an animation pattern on a screen, outputs a voice pattern, or outputs a vibration pattern in accordance with a tempo of a beat (a strong beat or a weak beat when the beat has intensity levels) and/or a silent beat of the registered rhythm pattern. Thereby, the user can sense the registered rhythm pattern.

In step S801, when the user selects "DELETE", the control section 602 deletes an item corresponding to a selected rhythm pattern from the personal data/rhythm dictionary storage section 603 (step S810), and ends the process.

As described above, in the sixth embodiment, the control system registers a rhythm dictionary table, a recognition parameter, and feedback setting information for each user, and changes information to be referenced, depending on the user. Therefore, it is possible to reduce a situation such that a rhythm pattern is not recognized due to differences among individuals, such as the way or tempo of beating a rhythm or the like.

Further, the control system can inform the user of the result of recognition of a rhythm pattern, so that the user can confirm whether or not a correct rhythm has been input.

Furthermore, the control system can cause the user to sense a registered rhythm pattern, so that the user can learn the registered rhythm pattern.

Furthermore, the control systemcan edit a rhythmdictionary, corresponding to a rhythm or characters input by the user. Therefore, it is possible to construct a customized rhythm dictionary.

### (Seventh Embodiment)

Next, a seventh embodiment of the present invention will be described. A structure of a control system according to the seventh embodiment and a whole structure of a system to which the control system is applied are similar to those of the first embodiment, and therefore, FIG. 1 is referenced. In the seventh embodiment, a larger number of functions are assigned rhythm patterns by defining the functions in a hierarchical manner.

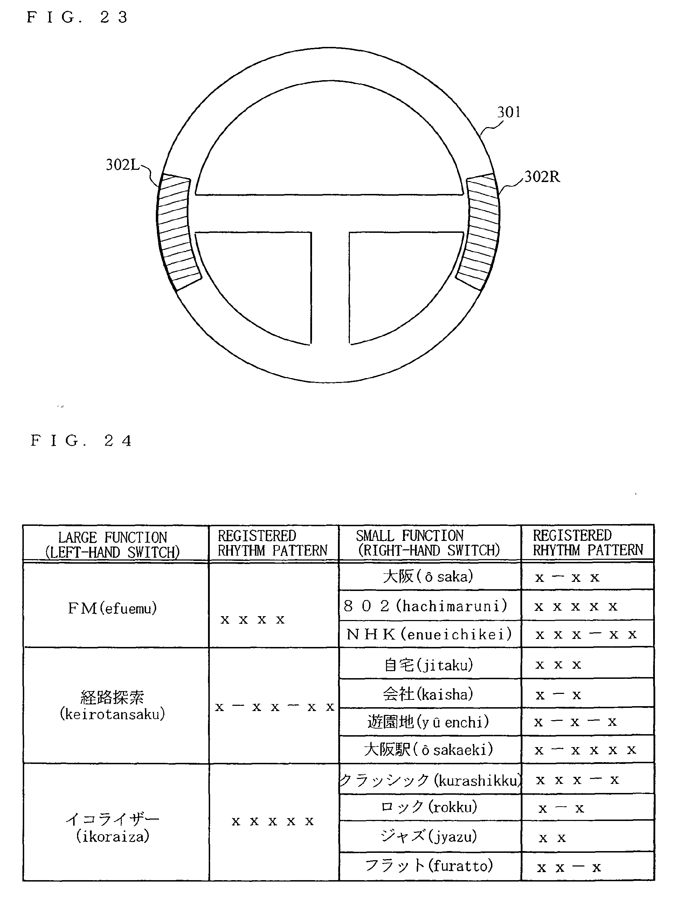

FIG. 23 is a diagram schematically showing a position in a vehicle of a rhythm input section 101 according to the seventh embodiment where the rhythm input section 101 is an analog input device composed of a piezoelectric sensor. This embodiment is characterized in that the rhythm input section 101 includes two or more input devices. The rhythm input section 101 incorporates a piezoelectric sensor 302L which is disposed on a left-hand portion of a steering wheel 301 and a piezoelectric sensor 302R which is disposed on a right-hand portion of the steering wheel 301 in order to enable the driver to easily beat them while driving. As in the first embodiment, a projection is provided at responsive portions of the piezoelectric sensors 302L and 302R. Note that any structure which can be easily found by groping may be used instead of a projection. Note that FIG. 22 is for illustrative purpose only. The two input devices may be disposed on other portions, such as upper and lower positions or the like, instead of the left- and right-hand positions.

FIG. 24 is a diagram showing an exemplary rhythm dictionary table stored in the rhythm dictionary storage section 103. Here, the contents of control commands are divided into two hierarchical structure layers: a large function; and a small function appending therebelow.

A rhythm pattern input from the left-hand portion piezoelectric sensor 302L is assigned to an input of a large function. A rhythm pattern input from the right-hand portion piezoelectric sensor 302R is assigned to an input of a small function. For example, a large function " 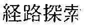 (keirotansaku)" (path search) is selected by tapping a rhythm "x-xx-xx" on the left-hand portion. Thereafter, a small function " 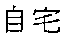 (jitaku)" (home) appending to the large function " 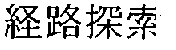 (keirotansaku)" (path search) is selected by tapping a rhythm "xxx" on the right-hand portion. The control section 102 interprets the combination of the two inputs, and controls an operation of an in-vehicle apparatus, such as, for example, causing a car navigation system to search for a path to home and start guiding.

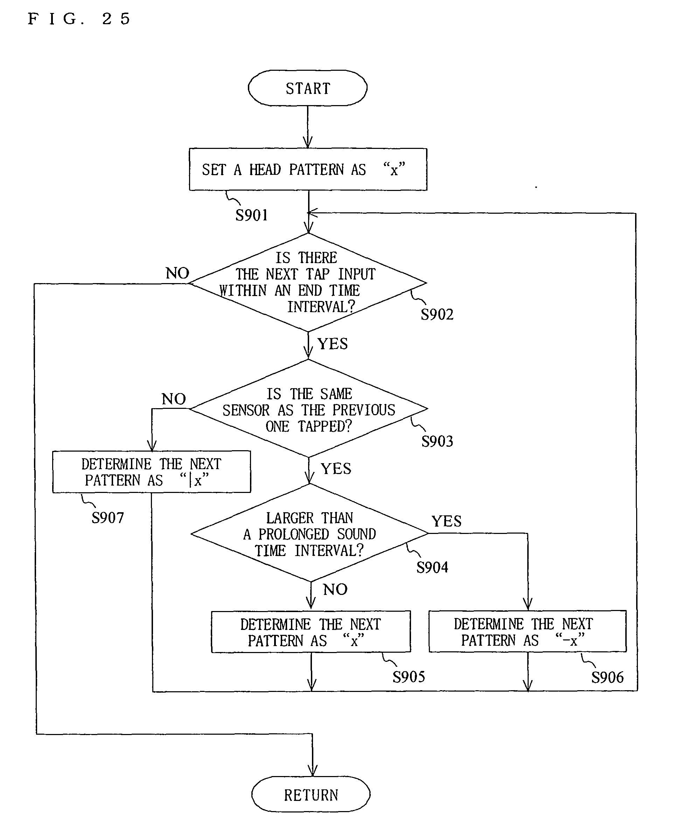

FIG. 25 is a flowchart showing a detailed operation of a control section 102 in a rhythm pattern recognition process. Hereinafter, the operation of the control section 1 02 in the rhythm pattern recognition process will be described with reference to FIG. 25.

The control section 102 sets a head pattern as "x" (step S901), and determines whether or not the next tap is input within an end time interval (step S902). When the next tap is not input, the control section 102 ends the process. On the other hand, when the next tap is input, the control section 102 determines whether or not a tapped sensor is on the same side as that of the previously tapped sensor (step S903). Here, the sensor refers to the piezoelectric sensor 302L, 302R (the same is hereinafter true).

When a sensor on a different side is tapped, the control section 102 determines the next pattern as "|x" (step S907), and returns to the operation of step S902. Here, "|" is a code representing the beginning or end of a word, i.e., indicating a time at which the user switches the sensors to be tapped.

On the other hand, when the tapped sensor is on the same side as that of the previous tap, the control section 1 02 determines whether or not the tap time interval is within the prolonged sound time interval (step S904), and a result of the determination, determines a pattern as "x" or "-x" (step S905 or S906), and returns to the operation of step S902.

When the tapped sensor is switched in the above-described manner, "|" is inserted into the rhythm pattern. When determining the presence or absence of a matching pattern, the control section 1 02 determines whether or not "|" is inserted. When "|" is inserted, the control section 102 determines whether a large function or a small function is being performed. When the large function is being performed, the control section 102 determines a matching rhythm pattern registered in the small function to control an in-vehicle apparatus. On the other hand, when the small function is being performed, the control section 102 determines a matching rhythm pattern registered in the large function to control an in-vehicle apparatus.

As described above, in the seventh embodiment, the control system automatically inserts the code indicating switching of hierarchical layers when the tapping sides are switched. When the code indicating switching of hierarchical layers is inserted, the control system switches rhythm dictionaries for determining matching of rhythm patterns, and references the corresponding rhythm dictionary to determine matching of rhythm patterns. Therefore, the control system can perform a control corresponding to a function of each hierarchical layer. Further, since the functions are organized into the hierarchical structure, the number of the control contents which can be performed by the control system can be increased.

Although an example of the two-layer hierarchical structure is shown in this embodiment, functions can be divided into three layers. In this case, for example, the highest layer is assigned to a left-hand portion sensor, the second layer is assigned to a right-hand portion sensor, and the third layer is assigned to the left-hand portion sensor again. The control system switches rhythm dictionaries to be used in accordance with a sequence of beating the left-hand portion, the right-hand portion and the left-hand portion. For example, when the left-hand portion is switched to the right-hand portion during determination in the first hierarchical layer, the control system recognizes transition from the first hierarchical layer to the second hierarchical layer. When the right-hand portion is switched to the left-hand portion during determination in the second hierarchical layer, the control section recognizes transition from the second hierarchical layer to the third hierarchical layer. When the left-hand portion is switched to the right-hand portion during determination in the third hierarchical layer, the control system recognizes return from the third hierarchical layer to the first hierarchical layer.

Similarly, the hierarchical structure may have four or more layers. In this case, the control system recognizes a hierarchical layer after transition based on a current hierarchical layer and the sequence of the switching sensors and references to a rhythm dictionary corresponding to the hierarchical layer.

Although a sensor is provided at two positions (i.e., the left-hand portion and the right-hand portion) in the seventh embodiment, the number of sensors provided is not limited to two. This is because the essence of this embodiment is to detect switching of sensors. Thus, a plurality of sensors are only required.

Note that the control system of the seventh embodiment may further comprise a function of memorizing a user-specific setting and a function of feeding it back as in the sixth embodiment.

Although the seventh embodiment shows a process of determination based on comparison of an input rhythm pattern with a prolonged sound time interval to recognize the input rhythm pattern, a process of recognizing a hierarchical structure may be applied to an input rhythm pattern recognition process, such as those used in the second to fifth embodiments.

Specifically, in the rhythm pattern recognition process of the second embodiment, the control system determines whether or not the next tap is input within the end time interval (see step S304 in FIG. 13), and thereafter, determines switching based on whether or not the same sensor as the previous one is tapped, and determines a rhythm pattern corresponding to the intensity of a beat.

Further, in the input rhythm pattern recognition process of the third embodiment, when recording a tap time interval (see step S401 in FIG. 14), the control system also determines switching of the sensors, and recognizes a rhythm pattern for each hierarchical layer in step S405 and thereafter. The same is true of the fourth and fifth embodiments.

### (Other Embodiments)

The present invention is not construed to be narrowly limited to the contents of the above-described embodiments.

Firstly, in each of the above-described embodiments, a rhythm input section constituting a piezoelectric sensor or a contact switch which serves as an operating device is provided on a steering wheel. A place where the rhythm input section is provided is not limited to this. The rhythm input section may be provided in any place, such as an armrest portion of a chair, the inside of an instrument panel, a back seat or the like, as with conventional operating device.

Although the control of in-vehicle apparatuses is illustrated in each of the above-described embodiments, the scope of the present invention is not limited to an in-vehicle system. For example, by providing a rhythm input section in a home apparatus, such as a television, a video recorder or the like, the user can operate these apparatuses by inputting a rhythm in a similar manner.

Further, communication between a rhythm input section and an apparatus may be performed in either a wireless or wired manner. For example, when wireless communication is performed, the rhythm input section may be provided on a remote controller, but not on the apparatus body.

Further although the control system is separated from each apparatus in each of the above-described embodiments, the control system may be incorporated in each apparatus. For example, the control section of each of the above-described embodiments may be implemented by executing a control programon a CPU in a computer, the rhythm input section may be implemented as a mouse, a keyboard and a virtual input pad displayed on a screen, and the rhythm dictionary may be implemented and stored in a hard disk. A rhythm may be input by clicking the mouse or the like on the input pad to execute the startup or a command of various kinds of software on a PC.

For example, when wishing to start up word processor software, the user clicks the mouse on the virtual input pad in accordance with a rhythm produced by uttering a word " 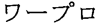 (wâpuro) " (word processor). The CPU which is executing a control program compares the rhythm with the rhythm dictionary, and depending on the result, starts up the word processor software. The control program on the PC is a program for causing the CPU to perform an operation, such as that of FIG. 6. Specifically, when there is a matching rhythm pattern, step S105 of FIG. 6 only needs to be replaced with an operation of executing corresponding software. In this case, the control system is provided as a control program which is capable of starting up various kinds of software and executing commands and is executed on a computer apparatus.

### INDUSTRIAL APPLICABILITY

As described above, the control system of the present invention can reliably perform a desired function in accordance with an operation instruction from the user using a small number of operating devices.

## Claims

1. A control system for controlling an operation of at least one apparatus, comprising:
a rhythm input section of outputting, as an input rhythm signal, an electrical signal whose amplitude level varies depending on a tap input from a user, the tap input corresponding to a pronunciationpatternof a name indicating the contents of a control of the apparatus;
a rhythm dictionary storage section of storing a rhythm dictionary table for associating the contents of the control of the apparatus with a registered rhythm pattern typifying the pronunciation pattern of the name indicating the contents of the control; and
a control section of controlling the operation of the apparatus,
wherein the control section comprises:
an input rhythm pattern recognition means of analyzing the input rhythm signal input from the rhythm input section to recognize an input rhythm pattern; and
an apparatus control means of referencing the rhythm dictionary table to search for a registered rhythm pattern matching the input rhythm pattern recognized by the input rhythm pattern recognition means, and based on the contents of the control corresponding to the registered rhythm pattern, controlling the apparatus.

2. The control system according to claim 1, wherein in the rhythm dictionary table, the registered rhythm pattern is defined by dividing the name indicating the contents of the control into at least one predetermined unit, and thereafter, assigning a predetermined unit rhythm pattern to each divided unit, and
the input rhythm pattern recognition means recognizes the input rhythm pattern by simplifying a temporal change in the amplitude level of the input rhythm signal.

3. The control system according to claim 2, wherein the unit rhythm pattern is defined by assigning the presence or absence of a beat to the presence or absence of a sound in the predetermined unit, and
the input rhythm pattern recognition means recognizes a beat timing at which the user taps the rhythm input section and/or a silent beat timing at which no tap is made for a predetermined time, based on the temporal change in the amplitude level, and recognizes the input rhythm pattern by representing the temporal change of the input rhythm signal using the beat and/or silent beat timing.

4. The control system according to claim 3, wherein an intensity of the sound of the predetermined unit is further defined in the unit rhythm pattern, and
the input rhythm pattern recognition means further recognizes an intensity of a tap at the beat timing in a stepwise manner based on an intensity of the amplitude level, and represents the intensity of the tap at the beat timing so that a strong tap is distinguished from a weak tap to recognize the input rhythm pattern.

5. The control system according to claim 3, wherein the input rhythm pattern recognition means further recognizes the input rhythm pattern such that there are a beat time and a silent beat time when the user continues to press the rhythm input section for the predetermined time interval.

6. The control system according to claim 2, wherein the unit rhythm pattern is defined by assigning the presence or absence of a beat to the presence or absence of a sound in the predetermined unit, and
the input rhythm pattern recognition means detects the presence or absence of the beat based on the degree of the amplitude level, assumes all possible rhythm patterns having beats in the number of detected beats, searches the assumed rhythm patterns for a rhythm pattern best matching a tendency of the temporal change of the input rhythm signal, and recognizes the retrieved rhythm pattern as the input rhythm pattern.

7. The control system according to claim 6, wherein the input rhythm pattern recognition means obtains a difference between a time interval between two adjacent beats in the assumed rhythm pattern and a time interval between two adjacent beats in the input rhythm signal, and recognizes a rhythm pattern having a smallest average value of the difference among the assumed rhythm patterns as the input rhythm pattern.

8. The control system according to claim 6, wherein when the beats are equally spaced in the recognized input rhythmpattern, the input rhythm pattern recognition means further determines whether or not the interval of the beat exceeds a predetermined time interval, and when the interval of the beat exceeds the predeter mined time interval, newly recognizes that the input rhythm pattern is a rhythm pattern in which a beat and a silent beat are continually repeated, or when the interval of the beat does not exceed the predetermined time interval, newly recognizes that the input tap pattern is a rhythm pattern in which only a beat is continually repeated.

9. The control system according to claim 6, wherein an intensity of the sound of the predetermined unit is further defined in the unit rhythm pattern, and
the input rhythm pattern recognition means further recognizes an intensity of a tap at the beat timing in a stepwise manner based on an intensity of the amplitude level, and represents the intensity of the tap at the beat timing so that a strong tap is distinguished from a weak tap to recognize the input rhythm pattern.

10. The control system according to claim 2, wherein the unit rhythm pattern is defined by assigning the presence or absence of a beat to the presence or absence of a sound in the predetermined unit, and
the input rhythm pattern recognition means searches the rhythm patterns registered in the rhythm dictionary table for a rhythm pattern best matching a tendency of the temporal change of the input rhythm signal, and recognizes the retrieved rhythm pattern as the input rhythm pattern.

11. The control system according to claim 10, wherein the input rhythm pattern recognition means detects the presence or absence of the beat based on the degree of the amplitude level, searches the rhythm patterns registered in the rhythm dictionary table for a rhythm pattern having beats in the number of the detected beats, and further searches the retrieved rhythm patterns for a rhythm pattern best matching a tendency of the temporal change, and recognizes the finally retrieved rhythm pattern as the input rhythm pattern.

12. The control system according to claim 11, wherein when further searching for a rhythm pattern best matching the tendency of the temporal change, the input rhythm pattern recognition means obtains a difference between a time interval between two adjacent beats in the retrieved rhythm pattern and a time interval between two adjacent beats in the input rhythm signal, and recognizes a rhythm pattern having a smallest average value of the difference among the retrieved rhythm patterns as the input rhythm pattern.

13. The control system according to claim 10, wherein an intensity of the sound of the predetermined unit is further defined in the unit rhythm pattern, and
the input rhythm pattern recognition means further recognizes an intensity of a tap at the beat timing in a stepwise manner based on an intensity of the amplitude level, and represents the intensity of the tap at the beat timing so that a strong tap is distinguished from a weak tap to recognize the input rhythm pattern.

14. The control system according to claim 2, wherein the unit rhythm pattern is defined by assigning the presence or absence of a beat to the presence or absence of a sound in the predetermined unit, and
the input rhythm pattern recognition means detects the presence or absence of the beat based on the degree of the amplitude level, obtains a smallest one of time intervals between two adjacent beats in the input rhythm signal, determines whether or not there is a silent beat between the two adjacent beats based on a relative value obtained by comparing the smallest time interval and a time interval between two other beats, and represents the temporal change of the input rhythm signal using a timing of the beat and/or the silent beat to recognize the input rhythm pattern.

15. The control system according to claim 14, wherein an intensity of the sound of the predetermined unit is further defined in the unit rhythm pattern, and
the input rhythm pattern recognition means further recognizes an intensity of a tap at the beat timing in a stepwise manner based on an intensity of the amplitude level, and represents the intensity of the tap at the beat timing so that a strong tap is distinguished from a weak tap to recognize the input rhythm pattern.

16. The control system according to claim 2, wherein the predetermined unit for dividing the name of the contents of the control is a mora unit.

17. The control system according to claim 2, wherein the predetermined unit for dividing the name of the contents of the control is a syllabic unit.

18. The control system according to claim 2, wherein the control section further comprises a rhythm pattern edition means of editing contents registered in the rhythm dictionary table in response to an instruction of the user.

19. The control system according to claim 18, wherein the rhythm pattern edition means causes the input rhythm pattern recognition means to recognize an input rhythm pattern intended by the user tapping the rhythm input section, and registers the input rhythm pattern as a registered rhythm pattern in the rhythm dictionary table.

20. The control system according to claim 18, wherein the rhythm pattern edition means divides the name of a control represented by character information input by the user into at least one predetermined unit, assigns a predetermined unit rhythm pattern to each divided unit to define a rhythm pattern, and registers the rhythm pattern as a registered rhythm pattern in the rhythm dictionary table.

21. The control system according to claim 18, wherein the rhythm pattern edition means edits the registered contents of the rhythm dictionary table while confirming duplication of the registered rhythm pattern.

22. The control system according to claim 2, wherein the control system is mounted in a vehicle.

23. The control system according to claim 22, wherein the rhythm input section is disposed on a steering wheel of the vehicle and has a structure which allows confirmation of a position by the sense of touch.

24. The control system according to claim 2, wherein, in the rhythm dictionary table, the contents of the control is defined in a hierarchical structure,
the apparatus control means memorizes a hierarchical layer currently searched, and searches matching of the input rhythm pattern and the registered rhythm pattern in the currently searched hierarchical layer, and
the rhythm input section further comprises a hierarchical layer switching means for causing the apparatus control means to switch the currently searched hierarchical layer.

25. The control system according to claim 24, wherein the rhythm input section comprises two or more input devices for inputting a tap by the user, and
the hierarchical layer switching means causes the apparatus control means to switch the currently searched hierarchical layer when the input device to be tapped is switched.

26. The control system according to claim 2, wherein a user-specific registered rhythm pattern is defined in the rhythm dictionary table, and
the apparatus control means searches for a matching registered rhythm pattern for each user.

27. The control system according to claim 2, wherein the input rhythm pattern recognition means memorizes a parameter required for detection of the temporal change of the input rhythm signal, and analyzes the input rhythm signal based on the parameter for each user.

28. The control system according to claim 2, further comprising an output section of informing the user of a result of the search by the apparatus control means in terms of whether or not there is a matching registered rhythm pattern.

29. The control system according to claim 2, further comprising a sensation output section of causing the user to sense the rhythm pattern registered in the rhythm dictionary table in response to an instruction of the user.

30. The control system according to claim 2, wherein when the amplitude of the input rhythm signal is at a LOW level for a predetermined time, the input rhythm pattern recognition means recognizes the input rhythm pattern assuming that the input is ended.

31. A method for controlling an operation of at least one apparatus using a computer apparatus, comprising the steps:
the computer apparatus analyzes an electrical signal input to the computer apparatus to recognize an input rhythm pattern;
the computer apparatus references a rhythm dictionary table for associating the contents of a control of the apparatus with a registered rhythm pattern typifying a pronunciation pattern of a name indicating the contents of the control of the apparatus, the rhythm dictionary table being stored in the computer apparatus, to search for a registered rhythm pattern matching the recognized input rhythm pattern; and
the computer apparatus controls the apparatus based on the contents of the control corresponding to the registered rhythm pattern.

32. A program for controlling an operation of at least one piece of software using a computer apparatus, comprising the steps:
the computer apparatus analyzes an electrical signal input to the computer apparatus to recognize an input rhythm pattern;
the computer apparatus references a rhythm dictionary table for associating the contents of a control of the apparatus with a registered rhythm pattern typifying a pronunciation pattern of a name indicating the contents of the control of the apparatus, the rhythm dictionary table being stored in the computer apparatus, to search for a registered rhythm pattern matching the recognized input rhythm pattern; and
the computer apparatus controls the apparatus based on the contents of the control corresponding to the registered rhythm pattern.

## Amended claims

### Amended claims under Art. 19.1 PCT

**17.** control is a syllabic unit.

**18.** The control system according to claim 1, wherein the control section further comprises a rhythm pattern edition means of editing contents registered in the rhythm dictionary table in response to an instruction of the user.

**19.** The control system according to claim 18, wherein the rhythm pattern edition means causes the input rhythm pattern recognition means to recognize an input rhythm pattern intended by the user tapping the rhythm input section, and registers the input rhythm pattern as a registered rhythm pattern in the rhythm dictionary table.

**20.** The control system according to claim 18, wherein the rhythm pattern edition means divides the name of a control represented by character information input by the user into at least one predetermined unit, assigns a predetermined unit rhythm pattern to each divided unit to define a rhythm pattern, and registers the rhythm pattern as a registered rhythm pattern in the rhythm dictionary table.

**21.** The control system according to claim 18, wherein the rhythm pattern edition means edits the registered contents of the rhythm dictionary table while confirming duplication of the registered rhythm pattern.

**22.** The control system according to claim 1, wherein the control system is mounted in a vehicle.

**23.** The control system according to claim 22, wherein the rhythm input section is disposed on a steering wheel of the vehicle and has a structure which allows confirmation of a position by the sense of touch.

**24.** The control system according to claim 1, wherein, in the rhythm dictionary table, the contents of the control is defined in a hierarchical structure,
the apparatus control means memorizes a hierarchical layer currently searched, and searches matching of the input rhythm pattern and the registered rhythmpattern in the currently searched hierarchical layer, and
the rhythm input section further comprises a hierarchical layer switching means for causing the apparatus control means to switch the currently searched hierarchical layer.

**25.** The control system according to claim 24, wherein the rhythm input section comprises two or more input devices for inputting a tap by the user, and
the hierarchical layer switching means causes the apparatus control means to switch the currently searched hierarchical layer when the input device to be tapped is switched.

**26.** The control system according to claim 1, wherein a user-specific registered rhythm pattern is defined in the rhythm dictionary table, and
the apparatus control means searches for a matching registered rhythm pattern for each user.

**27.** The control system according to claim 1, wherein the input rhythm pattern recognition means memorizes a parameter required for detection of the temporal change of the input rhythm signal, and analyzes the input rhythm signal based on the parameter for each user.

**28.** The control system according to claim 1, further comprising an output section of informing the user of a result of the search by the apparatus control means in terms of whether or not there is a matching registered rhythm pattern.

**29.** The control system according to claim 1, further comprising a sensation output section of causing the user to sense the rhythm pattern registered in the rhythm dictionary table in response to an instruction of the user.

**30.** The control system according to claim 1 , wherein when the amplitude of the input rhythm signal is at a LOW level for a predetermined time, the input rhythm pattern recognition means recognizes the input rhythm pattern assuming that the input is ended.

**31.** A method for controlling an operation of at least one apparatus using a computer apparatus, comprising the steps:
the computer apparatus analyzes an electrical signal input to the computer apparatus to recognize an input rhythm pattern;
the computer apparatus references a rhythm dictionary table for associating the contents of a control of the apparatus with a registered rhythm pattern typifying a pronunciation pattern of a name indicating the contents of the control of the apparatus, the rhythm dictionary table being stored in the computer apparatus, to search for a registered rhythm pattern matching the recognized input rhythm pattern; and
the computer apparatus controls the apparatus based on the contents of the control corresponding to the registered rhythm pattern.

**32.** A program for controlling an operation of at least one piece of software using a computer apparatus, comprising the steps:
the computer apparatus analyzes an electrical signal input to the computer apparatus to recognize an input rhythm pattern;
